# EUROPEAN PATENT SPECIFICATION

(11) **EP 3 886 024 B1**
(45) Date of publication and mention of the grant of the patent: **25.03.2026**
(21) Application number: 21164418.2
(22) Date of filing: 23.03.2021
(51) Int. Cl.: G06Q 30/0207, G06Q 20/14, G06Q 20/20, G06Q 20/32, G06Q 20/34, G07F 17/24, G06Q 20/38

(54) **INFORMATION PROCESSOR, INFORMATION PROCESSING METHOD, AND NON-TRANSITORY STORAGE MEDIUM**
INFORMATIONSPROZESSOR, INFORMATIONSVERARBEITUNGSVERFAHREN UND NICHTTRANSITORISCHES SPEICHERMEDIUM
PROCESSEUR D'INFORMATIONS, PROCÉDÉ DE TRAITEMENT D'INFORMATIONS ET SUPPORT DE STOCKAGE NON TRANSITOIRE

(30) Priority: 24.03.2020 JP 2020052669
(43) Date of publication of application: 29.09.2021
(73) Proprietor: TOYOTA JIDOSHA KABUSHIKI KAISHA, TOYOTA-SHI, AICHI-KEN 471-8571 (JP)
(72) Inventor: NAKABAYASHI, Ryota, TOYOTA-SHI, AICHI-KEN, 471-8571 (JP); YAMADA, Naoki, TOYOTA-SHI, AICHI-KEN, 471-8571 (JP); FUJII, Daigo, TOYOTA-SHI, AICHI-KEN, 471-8571 (JP); IKEGAYA, Atsushi, NAGOYA, AICHI-KEN, 460-0003 (JP)
(74) Representative: Cabinet Beau de Loménie

(56) References cited:
- JP-A- 2004 334 299
- JP-A- 2018 067 146
- JP-A- H11 102 485

## Description

### BACKGROUND OF THE INVENTION

### 1. Field of the Invention

The invention relates to an information processor, an information processing method, and a non-transitory storage medium.

### 2. Description of Related Art

Japanese Unexamined Patent Application Publication No. 2018-67146 (JP 2018-67146 A) discloses a technique regarding a store support device that provides a special offer to users when they visit a store, based on their purchase behaviors at an online store associated with this store. According to this technique, for example, a parking discount is offered to users who visited a physical store. This further motivates the users to visit the physical store. JP 2004-334299 A discloses a parking lot system having discount fees granted to users who have used stores.

### SUMMARY OF THE INVENTION

The invention encourages users of a parking lot associated with a commercial accumulation that is a collection of a plurality of stores to visit the stores belonging to the commercial accumulation.

An information processor according to a first aspect of the invention is defined in claim 1 and includes a control unit configured to: acquire a store visit behavior of a user of a vehicle parked in a parking lot associated with a commercial accumulation, the store visit behavior being related to a visit to a member store by the user, the member store being a store belonging to the commercial accumulation, and the commercial accumulation having a plurality of the member stores; calculate the number of visited stores based on the store visit behavior, the number of visited stores being the number of member stores visited by the user; determine a preferential service to be offered to the user regarding use of the parking lot, the preferential service being determined in such a manner that a level of the preferential service increases as the number of visited stores by the user increases; and perform a preferential treatment process of applying the preferential service to the user.

An information processing method according to a second aspect of the invention is defined in claim 12 and includes: acquiring by a computer a store visit behavior of a user of a vehicle parked in a parking lot associated with a commercial accumulation, the store visit behavior being related to a visit to a member store by the user, the member store being a store belonging to the commercial accumulation, and the commercial accumulation having a plurality of the member stores; calculating by the computer the number of visited stores based on the store visit behavior, the number of visited stores being the number of member stores visited by the user; determining by the computer a preferential service to be offered to the user regarding use of the parking lot, the preferential service being determined in such a manner that a level of the preferential service increases as the number of visited stores by the user increases; and performing by the computer a preferential treatment process of applying the preferential service to the user.

A non-transitory storage medium according to a third aspect of the invention is defined in claim 13 and stores instructions that are executable by one or more processors and that cause the one or more processors to perform functions including: acquiring a store visit behavior of a user of a vehicle parked in a parking lot associated with a commercial accumulation, the store visit behavior being related to a visit to a member store by the user, the member store being a store belonging to the commercial accumulation, and the commercial accumulation having a plurality of the member stores; calculating the number of visited stores based on the store visit behavior, the number of visited stores being the number of member stores visited by the user; determining a preferential service to be offered to the user regarding use of the parking lot, the preferential service being determined in such a manner that a level of the preferential service increases as the number of visited stores by the user increases; and performing a preferential treatment process of applying the preferential service to the user.

With the invention, users of a parking lot associated with a commercial accumulation that is a collection of a plurality of stores are encouraged to visit the stores belonging to the commercial accumulation.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a first diagram illustrating a schematic configuration of an information processing system of a first embodiment;
FIG. 2 illustrates components of the information processing system of the first embodiment in more detail;
FIG. 3 is a table of identification information stored in a storage unit of a server;
FIG. 4 is a table of the discount rate of a parking fee according to the number of visited stores in the first embodiment;
FIG. 5 illustrates a preferential service that is offered to a user of a vehicle parked in a parking lot in the first embodiment;
FIG. 6 is a flowchart of a process that is performed by the server to offer the preferential service to the user;
FIG. 7 is a table of a regular parking fee determined according to the parking time in the parking lot;
FIG. 8 illustrates the case where a discount on the parking fee is applied as the preferential service;
FIG. 9 illustrates information on the parking fee that is notified to the user of the vehicle when the vehicle leaves the parking lot;
FIG. 10 is a second diagram illustrating a schematic configuration of the information processing system of the first embodiment;
FIG. 11 illustrates a schematic configuration of an information processing system of a first modification of the first embodiment;
FIG. 12 illustrates in more detail components of a parking lot terminal, a store terminal, and a server that are included in the information processing system of the first modification of the first embodiment and also illustrates components of a mobile terminal that communicates with the parking lot terminal, the store terminal, and the server;
FIG. 13 is a flowchart of a process that is performed by the server of the first modification of the first embodiment to offer a preferential service to a user;
FIG. 14 is a first diagram illustrating behavior information of the user that is acquired by short-range wireless communication between the mobile terminal of the user and the store terminal;
FIG. 15 is a second diagram illustrating the behavior information of the user that is acquired by short-range wireless communication between the mobile terminal of the user and the store terminal;
FIG. 16 is a flowchart of a process that is performed by a server of a second modification of the first embodiment to offer a preferential service to a user;
FIG. 17 illustrates information on the preferential service that is sent to a mobile terminal of the user;
FIG. 18 illustrates a schematic configuration of an information processing system of a third modification of the first embodiment;
FIG. 19 illustrates behavior information of a user that is acquired based on position information of the user detected by a position detection unit included in a mobile terminal of the user;
FIG. 20 illustrates the discount rate that is determined based on the length of stay in member stores of a shopping mall in addition to the number of visited stores;
FIG. 21 illustrates a schematic configuration of an information processing system of a fourth modification of the first embodiment;
FIG. 22 is a flowchart of a process that is performed by a server of the fourth modification of the first embodiment to offer a preferential service to a user;
FIG. 23 is a first diagram illustrating behavior information of the user that is acquired based on first recognition information detected by a store camera;
FIG. 24 is a second diagram illustrating the behavior information of the user that is acquired based on first recognition information detected by the store cameras;
FIG. 25 illustrates a schematic configuration of an information processing system of a second embodiment;
FIG. 26 illustrates in more detail components of a mobile terminal included in the information processing system of the second embodiment and also illustrates components of a parking lot terminal and a store terminal that communicate with the mobile terminal;
FIG. 27 is a flowchart of a process that is performed by a server to offer a preferential service to a user according to the second embodiment;
FIG. 28 is a first diagram illustrating a preferential service that is offered to a user of a vehicle according to a third embodiment;
FIG. 29 is a second diagram illustrating a preferential service that is offered to a user of a vehicle according to the third embodiment;
FIG. 30 is a third diagram illustrating a preferential service that is offered to a user of a vehicle according to the third embodiment;
FIG. 31 illustrates information on the preferential service that is sent to a mobile terminal of the user;
FIG. 32 illustrates a schematic configuration of an information processing system of a fourth embodiment; and
FIG. 33 illustrates an example in which mobile store vehicles are rearranged based on the number of user visits to each member store.

### DETAILED DESCRIPTION OF EMBODIMENTS

In the present disclosure, a control unit acquires a store visit behavior of a user of a vehicle parked in a parking lot associated with a predetermined commercial accumulation to visit a member store of the commercial accumulation. The commercial accumulation is a collection of a plurality of stores, and the stores belonging to the commercial accumulation are referred as member stores. The parking lot associated with the commercial accumulation is a parking lot provided by the commercial accumulation, a parking lot located near the commercial accumulation and having a specific contractual relationship with the commercial accumulation, etc. The control unit calculates the number of visited stores by the user of the vehicle parked in the parking lot, based on the acquired store visit behavior. The number of visited stores is the number of member stores visited by the individual user.

The control unit performs a preferential treatment process of providing the user of the vehicle with preferential treatment regarding the use of the parking lot. The control unit adjusts the preferential treatment so that the larger the number of visited stores by the user of the vehicle, the higher the level of the preferential service to be offered to the user of the vehicle by the preferential treatment process. The preferential treatment process is, e.g., a process of discounting a parking fee to be paid by the user or a process of preferentially providing the user with a parking spot at the next or later visit. In the case where the preferential treatment process is the process of discounting a parking fee to be paid by the user, the control unit performs the preferential treatment process by charging the discounted parking fee to the user who used the parking lot. In the case where the preferential treatment process is the process of preferentially providing the user with a parking spot at the next or later visit, the control unit performs the preferential treatment process by notifying the user who used the parking lot that he or she is offered a service to preferentially get a parking spot at the next or later visit and sending predetermined information to be used when the user uses this preferential service at the next or later visit.

According to the information processor of the present disclosure, the preferential service is adjusted such that the larger the number of visited stores by the user of the vehicle parked in the parking lot, the higher the level of the preferential service to be offered to the user of the vehicle by the preferential treatment process. The user is thus more motivated to visit more member stores of the predetermined commercial accumulation. The users of the parking lot associated with the predetermined commercial accumulation can therefore be encouraged to visit the member stores of the commercial accumulation.

Embodiments of the present disclosure will be described with reference to the accompanying drawings. The configurations of the following embodiments are illustrative, and the present disclosure is not limited to the configurations of the following embodiments.

### First Embodiment

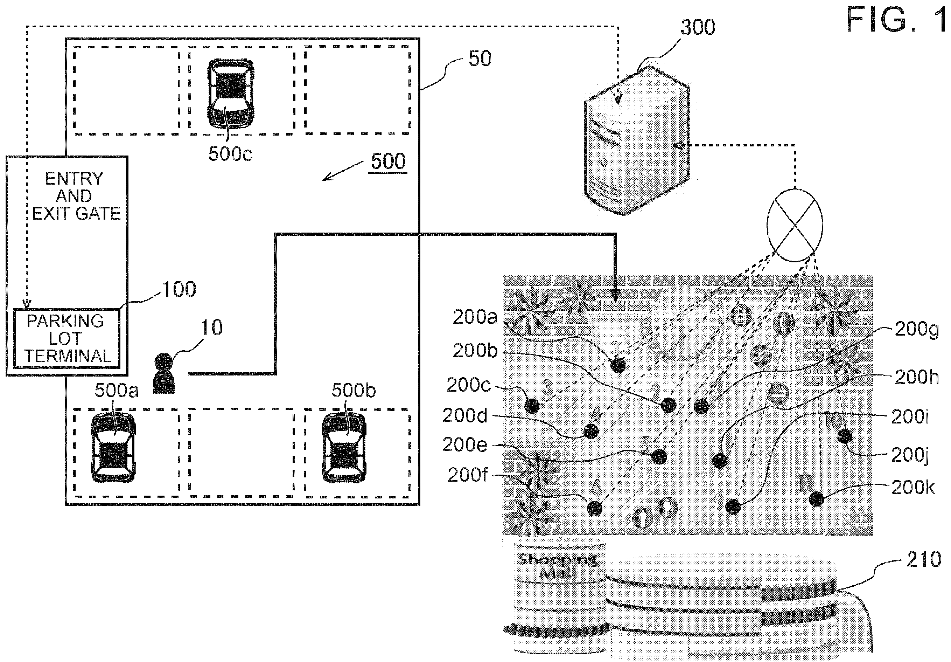

An information processing system according to a first embodiment will be outlined with reference to FIG. 1. The information processing system according to the present embodiment includes a parking lot terminal 100 installed in a parking lot 50, store terminals 200 installed in member stores 20 that are stores belonging to a shopping mall 210 (member stores 20a to 20k corresponding to 1 to 11 in FIG. 1), and a server 300. The parking lot 50 is a parking lot associated with the shopping mall 210. Specifically, the parking lot 50 is a parking lot provided by the shopping mall 210. In the present embodiment, as shown in FIG. 1, vehicles 500a, 500b, and 500c are vehicles 500 parked in the parking lot 50. Store terminals 200a to 200k are the store terminals 200 installed in the member stores 20a to 20k.

The parking lot terminal 100 is a device installed in the parking lot 50. In the present embodiment, the parking lot terminal 100 is installed at an entry and exit gate of the parking lot 50. The parking lot terminal 100 includes an entry and exit detection sensor that detects that a vehicle has approached the entry and exit gate. The entry and exit detection sensor is, e.g., an infrared sensor etc. The parking lot terminal 100 can detect a vehicle that is about to enter the parking lot 50 or a vehicle that is about to leave the parking lot 50 by the entry and exit detection sensor. The parking lot terminal 100 includes an interface for inputting and outputting information. When the parking lot terminal 100 detects a vehicle that is about to enter the parking lot 50 by the entry and exit detection sensor, that is, when a vehicle enters the parking lot 50, the parking lot terminal 100 can issue an identification (ID) card to a user of the vehicle. When the parking lot terminal 100 detects a vehicle that is about to leave the parking lot 50 by the entry and exit detection sensor, that is, when a vehicle leaves the parking lot 50, the parking lot terminal 100 can collect an ID card from a user of the vehicle. The ID card has recorded thereon identification information and entry time of the vehicle. The parking lot terminal 100 can display on a display device such as a display a parking fee calculated based on the entry time recorded on the ID card and the time the ID card was collected (exit time of the vehicle). The ID card is, e.g., a magnetic card.

The store terminals 200 are devices installed in the member stores 20 of the shopping mall 210. The store terminal 200 includes an interface for inputting and outputting information. For example, in the case where the ID card is a magnetic card, the store terminal 200 can read the identification information recorded on the magnetic card by reading a magnetic field from a magnetic stripe on the ID card by a card reader with a magnetic head. The interface included in the store terminal 200 can be of any type as long as it can acquire the identification information recorded on the ID card.

The server 300 is configured to communicate with the parking lot terminal 100. The server 300 can acquire data sent from the parking lot terminal 100 (e.g., the identification information of the collected ID card). For example, the server 300 can calculate a parking fee to be paid by the user of the vehicle, based on the data sent from the parking lot terminal 100, and send the parking fee information to the parking lot terminal 100. The server 300 is configured to communicate with the store terminal 200. The server 300 can acquire data sent from the store terminal 200 (e.g., the identification information of the ID card acquired via the interface).

The server 300 acquires a store visit behavior of a user 10 of the vehicle 500 parked in the parking lot 50 associated with the shopping mall 210. The store visit behavior or the user 10 is related to a visit to the member store 20 by the user 10. As described above, the server 300 can acquire data sent from the store terminal 200. When the user 10 operates the store terminal 200 to input to the store terminal 200 the information recorded on the ID card issued by the parking lot terminal 100, the store terminal 200 sends this recorded information to the server 300. The server 300 can thus acquire the recorded information sent from the store terminal 200. In the present embodiment, the server 300 acquires the store visit behavior of the user 10 related to the visit to the member store 20 by acquiring the identification information recorded on the ID card of the user 10 visiting the member store 20. The information that is sent from the store terminal 200 of the member store 20 to the server 300 includes store information that identifies the member store 20 in addition to the identification information recorded on the ID card of the user 10 visiting the member store 20.

After the server 300 acquires the store visit behavior of the user 10 to visit the member store 20, the server 300 calculates the number of visited stores, which is the number of member stores visited by the individual user, based on this store visit behavior. The server 300 performs a preferential treatment process of providing the user 10 of the vehicle 500 with preferential treatment regarding the use of the parking lot 50. The server 300 adjusts the preferential treatment so that the larger the number of visited stores by the user 10 of the vehicle 500, the higher the level of preferential service to be offered to the user 10 of the vehicle 500 by the preferential treatment process. In the present embodiment, the preferential treatment process refers to a process of discounting the parking fee to be paid by the user 10 who parked the vehicle 500 in the parking lot 50.

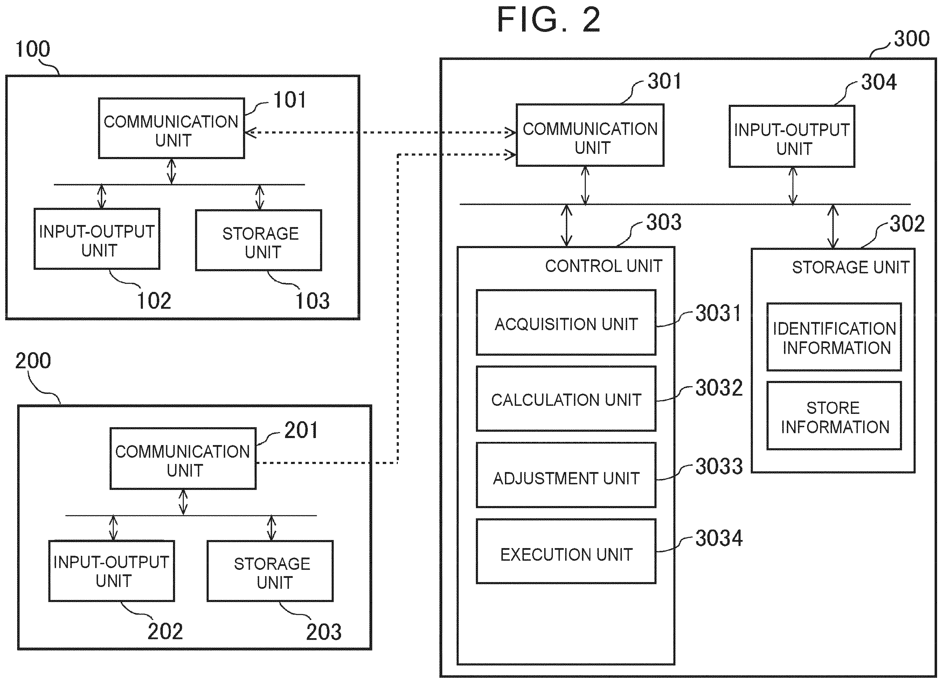

Next, components of the server 300 will be mainly described in detail with reference to FIG. 2. FIG. 2 more specifically illustrates the components of the server 300 included in the information processing system according to the first embodiment. FIG. 2 also illustrates components of both the parking lot terminal 100 and the store terminal 200 that communicate with the server 300.

The server 300 may be a general-purpose computer. That is, the server 300 may be configured as a computer including a processor such as a central processing unit (CPU) and a graphics processing unit (GPU), a main storage device such as a random access memory (RAM) and a read only memory (ROM), and an auxiliary memory device such as an erasable programmable read only memory (EPROM), a hard disk drive, and a removable medium. The removable medium may be, e.g., a universal serial bus (USB) memory or a disc recording medium such as a compact disc (CD) or a digital versatile disc (DVD). The auxiliary memory device has stored therein an operating system (OS), various programs, various tables, etc. The server 300 includes a communication unit 301, a storage unit 302, a control unit 303, and an input-output unit 304 as functional units. The server 300 loads the programs stored in the auxiliary storage device into a working area of the main storage device and executes the loaded programs. As the functional units etc. are controlled by execution of the programs, the server 300 can implement functions in the functional units according to a predetermined purpose. A part or all of the functions may be implemented by a hardware circuit such as an application specific integrated circuit (ASIC) or a field programmable gate array (FPGA).

The communication unit 301 is a communication interface for connecting the server 300 to a network. The communication unit 301 includes, e.g., a network interface board and a wireless communication circuit for wireless communication. The server 300 is communicably connected to the parking lot terminal 100, the store terminals 200, and other external devices via the communication unit 301.

The storage unit 302 includes a main storage device and an auxiliary storage device. The main storage device is a memory into which programs to be executed by the control unit 303 and data to be used by the control programs are loaded. The auxiliary storage device is a device in which the programs to be executed by the control unit 303 and the data to be used by the control programs are stored.

The storage unit 302 stores data sent from the store terminal 200. The server 300 acquires this data via the communication unit 301. The data that is stored in the storage unit 302 is, e.g., information recorded on the ID card of the user 10, namely the identification information input to the store terminal 200 via the interface of the store terminal 200 as operated by the user 10 and sent to the server 300. The data that is stored in the storage unit 302 includes the information that is sent together with the identification information from the store terminal 200 to the server 300, namely the store information that identifies the member store 20.

The control unit 303 is a functional unit in charge of controls that are performed by the server 300. The control unit 303 can be implemented by an arithmetic processing unit such as a CPU. The control unit 303 includes four functional units, namely an acquisition unit 3031, a calculation unit 3032, an adjustment unit 3033, and an execution unit 3034. These functional units may be implemented by the CPU executing the stored programs.

The acquisition unit 3031 acquires the store visit behavior of the user 10 to visit the member store 20, based on the information sent from the store terminal 200, namely the identification information recorded on the ID card issued to the user 10 by the parking lot terminal 100. The information that is sent from the store terminal 200 of the member store 20 to the server 300 includes the store information that identifies the member store 20, in addition to the identification information recorded on the ID card of the user 10 visiting the member store 20.

As shown in FIG. 2, the store terminal 200 includes a communication unit 201, an input-output unit 202, and a storage unit 203 as functional units. The store terminal 200 may include functional units other than these functional units. The communication unit 201 is a communication interface for connecting the store terminal 200 to a network. The communication unit 201 includes, e.g., a network interface board and a wireless communication circuit for wireless communication. The input-output unit 202 is a functional unit for inputting information when sending the information to the outside via the communication unit 201. The input-output unit 202 includes, e.g., a card reader or a touch panel. Like the storage unit 302 of the server 300, the storage unit 203 includes a main storage device and an auxiliary storage device. The storage unit 203 stores the store information that identifies the member store 20. The store information is registered in advance using a predetermined application.

The user 10 visiting the member store 20 operates the input-output unit 202 of the store terminal 200 to input to the store terminal 200 the information (identification information) recorded on the ID card issued by the parking lot terminal 100. For example, in the case where the ID card is a magnetic card, the user 10 operates the card reader that is the input-output unit 202 of the store terminal 200 to input the identification information recorded on the magnetic card to the store terminal 200. The identification information thus input to the store terminal 200 via the input-output unit 202 is sent together with the store information of the member store 20 from the store terminal 200 to the server 300 via the communication unit 201. The acquisition unit 3031 acquires the information thus sent from the store terminal 200 to acquire the store visit behavior of the user 10 to visit the member store 20. In the present embodiment, the store visit behavior of the user 10 to visit the member store 20 refers to the behavior of the user 10 visiting the member store 20 to input the identification information recorded on the ID card of the user 10 to the store terminal 200.

The calculation unit 3032 calculates the number of visited stores, which is the number of member stores visited by the individual user, based on the identification information on the ID card of the user 10 acquired by the acquisition unit 3031 and stored in the storage unit 302.

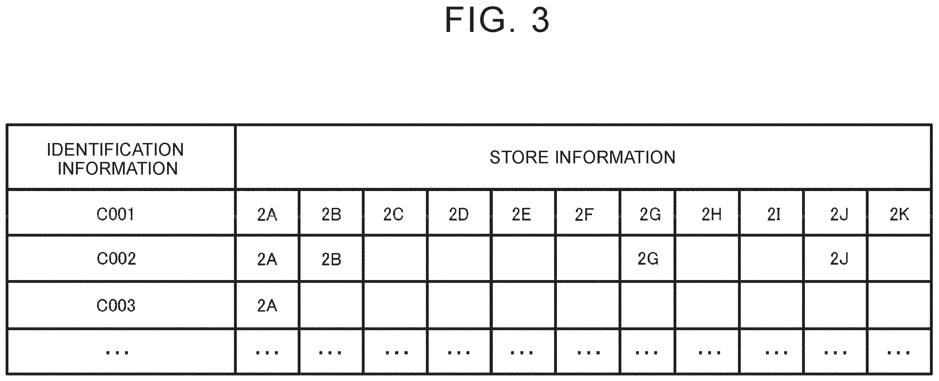

FIG. 3 is a table showing the identification information stored in the storage unit 302 of the server 300. As shown in FIG. 3, the identification information is stored in the storage unit 302 in association with the store information of each member store 20 having the store terminal 200 that has sent this identification information. For example, identification information C001 is associated with store information 2A to 2K. The store information 2A to 2K is information corresponding to the member stores 20a to 20k of the shopping mall 210. The store information that identifies the member store 20a is the store information 2A. In other words, a user who has an ID card with the identification information C001 recorded thereon (this user is, e.g., the user of the vehicle 500a shown in FIG. 1) has visited all of the member stores 20 of the shopping mall 210 (the member stores 20a to 20k). A user who has an ID card with identification information C002 recorded thereon (this user is, e.g., the user of the vehicle 500b shown in FIG. 1) has visited the member stores 20a, 20b, 20g, and 20j. A user who has an ID card with identification information C003 recorded thereon (this user is, e.g., the user of the vehicle 500c shown in FIG. 1) has visited the member store 20a.

For example, the calculation unit 3032 calculates that the number of visited stores is 11 for the user of the vehicle 500a who has the ID card with the identification information C001 shown in FIG. 3 recorded thereon. Similarly, the calculation unit 3032 calculates that the number of visited stores is four for the user of the vehicle 500b who has the ID card with the identification information C002 recorded thereon. The calculation unit 3032 also calculates that the number of visited stores is one for the user of the vehicle 500c who has the ID card with the identification information C003 recorded thereon.

Referring back to FIG. 2, the adjustment unit 3033 of the control unit 303 of the server 300 determines a preferential service to be offered to the user 10 of the vehicle 500 regarding the use of the parking lot 50, based on the number of visited stores calculated by the calculation unit 3032. The adjustment unit 3033 adjusts the preferential service so that the larger the number of visited stores by the user 10 of the vehicle 500, the higher the level of the preferential service. In the present embodiment, the preferential service relates to offering a discount on the parking fee to be paid by the user 10 who parked the vehicle 500 in the parking lot 50.

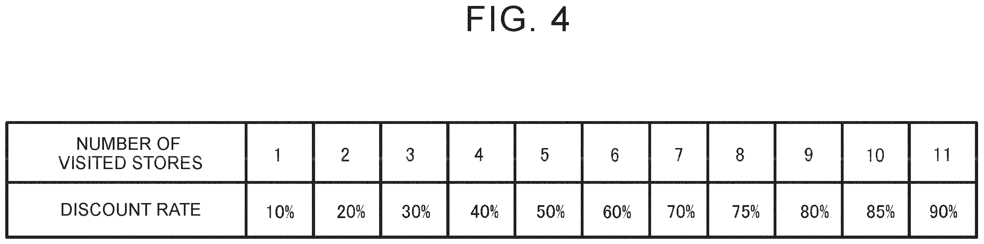

FIG. 4 is a table showing the discount rate on the parking fee according to the number of visited stores in the present embodiment. In the present embodiment, as shown in FIG. 4, the larger the number of visited stores, the higher the discount rate. For example, in the case where the number of visited stores is one, the discount rate is adjusted to 10%. In the case where the number of visited stores is 11, the discount rate is adjusted to 90%. The discount rate shown in FIG. 4 is merely an example, and the preferential service relating to offering a discount on the parking fee according to the present embodiment is not limited to this. In the case where the number of visited stores is zero, the discount rate is adjusted to 0%, that is, the parking fee is not discounted.

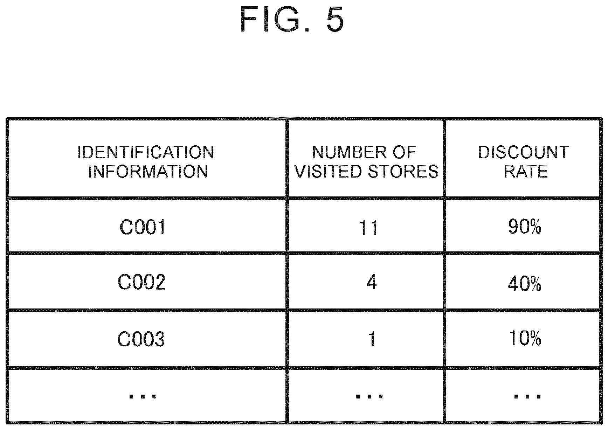

As shown in FIG. 5, for the user of the vehicle 500a who has the ID card with the identification information C001 recorded thereon, the adjustment unit 3033 adjusts the discount rate to 90% as the preferential service relating to offering a discount on the parking fee, as the number of visited stores is 11. Similarly, for the user of the vehicle 500b who has the ID card with the identification information C002 recorded thereon, the adjustment unit 3033 adjusts the discount rate to 40% as the number of visited stores is four. For the user of the vehicle 500c who has the ID card with the identification information C003 recorded thereon, the adjustment unit 3033 adjusts the discount rate to 10% as the number of visited stores is one. FIG. 5 is a table illustrating the preferential service that is offered to the users 10 of the vehicles 500 parked in the parking lot 50 in the present embodiment. As described above, in the present embodiment, the preferential service is adjusted so that, of the users 10 of the vehicles 500, the user with a larger number of visited stores can get a higher level of the preferential service.

Referring back to FIG. 2, the execution unit 3034 of the control unit 303 of the server 300 performs the preferential treatment process of providing the user 10 of the vehicle 500 with preferential treatment regarding the use of the parking lot 50. As described above, the server 300 can communicate with the parking lot terminal 100 and can acquire information input to the parking lot terminal 100 and send information such as the parking fee to be paid by the user 10 of the vehicle 500 to the parking lot terminal 100 via communication.

As shown in FIG. 2, the parking lot terminal 100 includes a communication unit 101, an input-output unit 102, and a storage unit 103 as functional units. The parking lot terminal 100 may include functional units other than these functional units. The communication unit 101 is a communication interface for connecting the parking lot terminal 100 to a network. The communication unit 101 includes, e.g., a network interface board and a wireless communication circuit for wireless communication. The input-output unit 102 is a functional unit for inputting and outputting information when sending the information to the outside and receiving the information from the outside via the communication unit 101. For example, the input-output unit 102 includes an interface, a display device, or a touch panel that can issue and collect an ID card. Like the storage unit 302 of the server 300, the storage unit 103 includes a main storage device and an auxiliary storage device. The storage unit 103 stores identification information recorded on an ID card issued by the input-output unit 102. The identification information is registered in advance using a predetermined application.

When the vehicle 500 leaves the parking lot 50, the user 10 of the vehicle 500 inputs the ID card to the input-output unit 102 of the parking lot terminal 100. In other words, the ID card of the user 10 is collected by the input-output unit 102 of the parking lot terminal 100. The identification information recorded on the ID card is then sent to the server 300 via the communication unit 101. The ID card has recorded thereon the entry time of the vehicle 500, namely the time the vehicle 500 entered the parking lot 50. The server 300 acquires the entry time together with the identification information. The server 300 acquires the time the ID card was collected (exit time of the vehicle 500) together with the identification information and the entry time, and calculates a regular parking fee to be charged to the user 10 of the vehicle 500 based on the entry and exit times of the vehicle 500. As used herein, the regular parking fee refers to a normal parking fee before the discount on the parking fee in the present embodiment is applied.

The execution unit 3034 applies such a discount rate as shown in FIG. 5 to the calculated regular parking fee as the preferential service to calculate a parking fee to be paid by the user 10 who parked the vehicle 500 in the parking lot 50. The execution unit 3034 performs the preferential treatment process by charging the discounted parking fee to the user 10. In the case where the number of visited stores by the user 10 is zero and the discount rate has been adjusted to 0%, the execution unit 3034 calculates the regular parking fee as a parking fee to be paid by the user 10. The execution unit 3034 sends the calculated discounted parking fee to the parking lot terminal 100 via the communication unit 301. The user 10 is thus notified of the discounted parking fee. As described above, the parking lot terminal 100 includes the input-output unit 102 and can display on the display device etc. information on the parking fee sent from the server 300.

The control unit 303 functions as the control unit according to the invention by executing the processes of the acquisition unit 3031, the calculation unit 3032, the adjustment unit 3033, and the execution unit 3034. The server 300 is an example of the information processor according to the invention.

The input-output unit 304 is an interface for inputting and outputting information. The input-output unit 304 includes, e.g., a display device or a touch panel. The input-output unit 304 may include a keyboard, a short-range communication unit, a touch screen, etc.

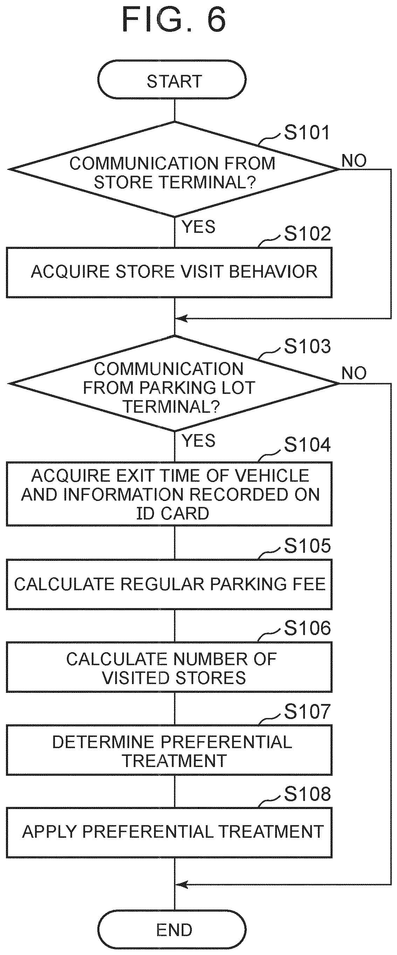

A process that is performed by the server 300 to offer the preferential service to the user 10 will be described based on the flowchart of FIG. 6. This process is performed by the control unit 303 of the server 300. First, in S101, it is determined whether there has been communication from the store terminal 200. The control unit 303 determines whether there has been communication from the store terminal 200 by determining whether data has been sent from the store terminal 200 to the communication unit 301 of the server 300. When YES in S101, the routine proceeds to S102. When NO in S101, the routine proceeds to S103.

When YES in S101, the store visit behavior of the user 10related to the visit to the member store 20 is acquired in step S102. The control unit 303 acquires the store visit behavior of the user 10 related to the visit to the member store 20 by acquiring the information sent from the store terminal 200, namely the identification information recorded on the ID card of the user 10. The information sent from the store terminal 200 includes the store information that identifies the member store 20 visited by the user 10, in addition to the identification information recorded on the ID card of the user 10 visiting the member store 20 having this store terminal 200. The control unit 303 having acquired the identification information and the store information stores the identification information in association with the store information in the storage unit 302 of the server 300. After S102 is finished, the routine proceeds to S103.

In S103, it is determined whether there has been communication from the parking lot terminal 100. The control unit 303 determines whether there has been communication from the parking lot terminal 100 by determining whether data has been sent from the parking lot terminal 100 to the communication unit 301 of the server 300. When YES in S103, the routine proceeds to S104. When NO in S103, the routine is ended.

When YES in S103, the time when the user 10 input the ID card to the parking lot terminal 100, that is, the time when the ID card of the user 10 was collected by the parking lot terminal 100 (exit time of the vehicle 500), and the information recorded on the collected ID card are acquired in S104. The ID card has recorded thereon the entry time of the vehicle 500, namely the time the vehicle 500 entered the parking lot 50, in addition to the identification information. Accordingly, the control unit 303 can acquire the entry time of the vehicle 500 to the parking lot 50 and the exit time of the vehicle 500 from the parking lot 50 and can calculate the parking time of the vehicle 500 in the parking lot 50 based on the entry and exit times of the vehicle 500. After S104 is finished, the routine proceeds to S105.

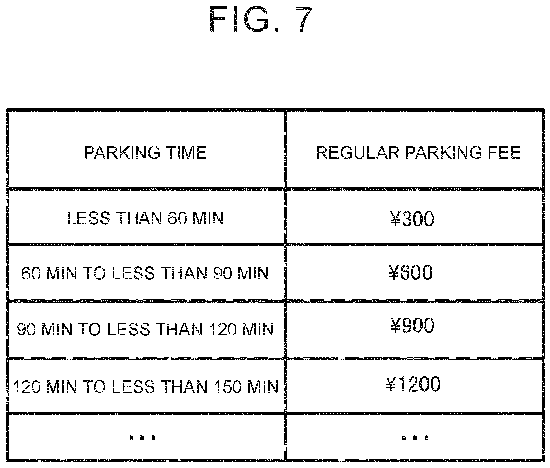

In S105, the regular parking fee to be charged to the user 10 of the vehicle 500 is calculated. The regular parking fee is predetermined for the parking lot 50 according to the parking time of the vehicle 500 parked in the parking lot 50. FIG. 7 is a table showing the regular parking fee determined according to the parking time in the parking lot 50. The control unit 303 calculates the regular parking fee to be charged to the user having the identification information acquired in S104, based on the parking fee table shown in FIG. 7 and the parking time calculated based on the information acquired in S104.

Thereafter, in S106, the number of visited stores is calculated for the user having the identification information acquired in S104. The control unit 303 calculates the number of visited stores by the user having the identification information by comparing the information acquired and stored in the storage unit 302 in S102 (the identification information and store information stored in association with each other) with the identification information acquired in S104. When S106 is finished, the routine proceeds to S107.

In S107, the preferential service is determined for the user having the identification information acquired in S104. The control unit 303 determines the preferential service to be offered to this user regarding the use of the parking lot 50, based on the number of visited stores calculated in S106. At this time, the control unit 303 adjusts the preferential service so that the larger the number of visited stores by the user, the higher the level of the preferential service to be offered to the user. As described above, the preferential service in the present embodiment relates to offering a discount on the parking fee to be paid by the user 10 who parked the vehicle 500 in the parking lot 50.

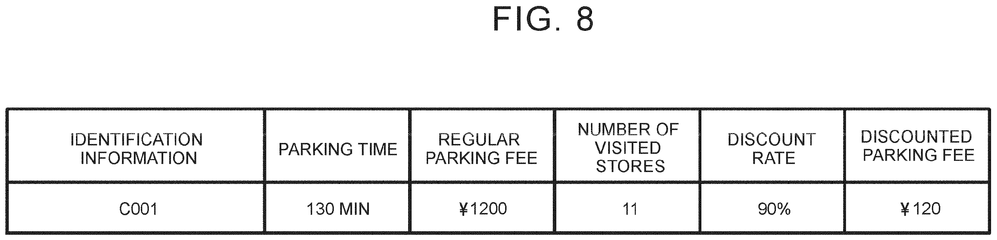

Subsequently, in S108, the preferential treatment process is performed for the user having the identification information acquired in S104. The control unit 303 applies the preferential service determined in S107 to the user having the identification information acquired in S104. In the present embodiment, the control unit 303 performs the preferential treatment process by charging the discounted parking fee to this user. FIG. 8 illustrates the case where a discount on the parking fee is applied as the preferential service. It is herein assumed that the user who has the ID card with the identification information C001 shown in FIG. 8 recorded thereon is the user 10 who parked the vehicle 500a in the parking lot 50. According to FIG. 8, the user 10 who has the ID card with the identification information C001 recorded thereon has parked the vehicle 500a in the parking lot 50 for 130 minutes, and the regular parking fee to be charged to the user 10 is 1,200 yen. Since the user 10 visited 11 of the member stores 20 of the shopping mall 210, the discount rate of the parking fee is adjusted to 90% as the preferential service for the user 10. In this case, the control unit 303 applies the discount rate of 90% to the regular parking fee of 1,200 yen as the preferential service. As a result, the parking fee to be actually paid by the user 10 is calculated as 120 yen.

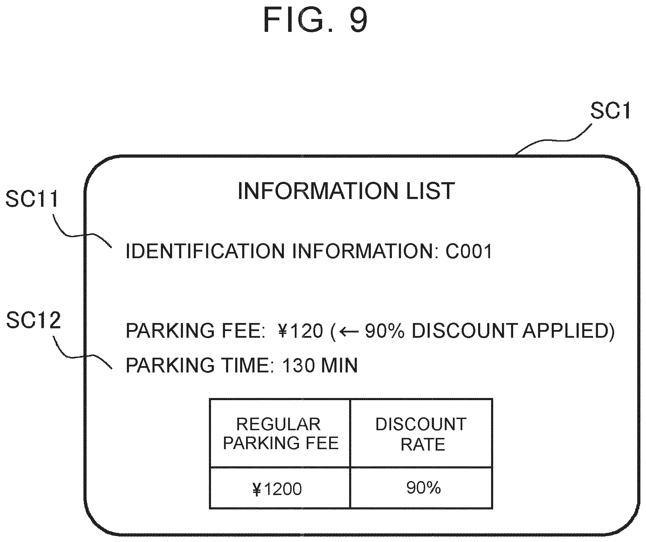

The control unit 303 sends information on the parking fee to the parking lot terminal 100 via the communication unit 301. The information that is sent to the parking lot terminal 100 includes information on the preferential service. FIG. 9 illustrates the information on the parking fee that is notified to the user 10 of the vehicle 500 when the vehicle 500 leaves the parking lot 50. The information list shown in FIG. 9 is displayed on the display device etc. of the parking lot terminal 100 by a predetermined application. As shown in FIG. 9, information SC11 on identification and parking fee information SC12 are displayed on an information list screen SC1. The information SC11 on identification is the identification information acquired by the control unit 303 in S104. As shown in FIG. 9, the parking fee, the parking time, the regular parking fee, and the discount rate are displayed on the information list screen SC1 as the parking fee information SC12. Since the user 10 is thus notified of the discount rate, the user 10 can recognize that the preferential service has been offered to him or her.

As described above, the larger the number of visited stores by the user 10 of the vehicle 500 parked in the parking lot 50 associated with the shopping mall 210, the higher the discount rate of the fee for using the parking lot 50 by the user 10 is set, and the discount rate is applied to the parking fee to be paid by the user 10. The user 10 is thus more motivated to visit more member stores 20 of the shopping mall 210. The users of the parking lot 50 associated with the shopping mall 210 can therefore be encouraged to visit the member stores 20 of the shopping mall 210.

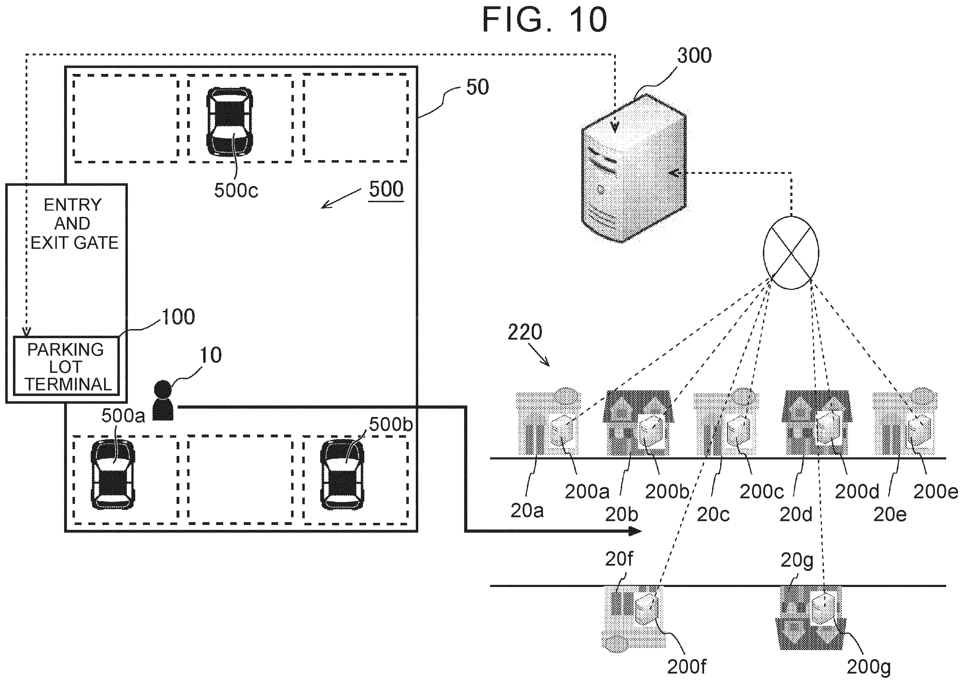

Although the parking lot 50 described above is a parking lot associated with the shopping mall 210, the parking lot according to the invention is not limited to this. For example, as shown in FIG. 10, in the case where the commercial accumulation according to the invention is a shopping street 220, the parking lot 50 may be a parking lot associated with the shopping street 220. FIG. 10 is a second diagram illustrating a schematic configuration of the information processing system of the present embodiment. In this case, the parking lot 50 may be either a parking lot provided by the shopping street 220 or a parking lot located near the shopping street 220 and having a specific contractual relationship with the shopping street 220.

In the case where the commercial accumulation according to the invention is the shopping street 220, the store terminals 200 (store terminals 200a to 200g in FIG. 10) are installed in the member stores 20 of the shopping street 220 (member stores 20a to 20g in FIG. 10). The server 300 acquires the store visit behavior of the user 10 by acquiring identification information input to the store terminal 200 via the interface of the store terminal 200 as operated by the user 10 (this identification information has been recorded on the ID card of the user 10) and sent from the store terminal 200. The server 300 then calculates the number of visited stores by the user 10 out of the member stores 20 of the shopping street 220, based on the acquired store visit behavior of the user 10, and performs the preferential treatment process of offering to the user 10 the preferential service that is adjusted based on the number of visited stores. In this case as well, the user 10 is more motivated to visit more member stores 20 of the shopping street 220. The users of the parking lot 50 associated with the shopping street 220 can therefore be encouraged to visit the member stores 20 of the shopping street 220.

### First Modification of First Embodiment

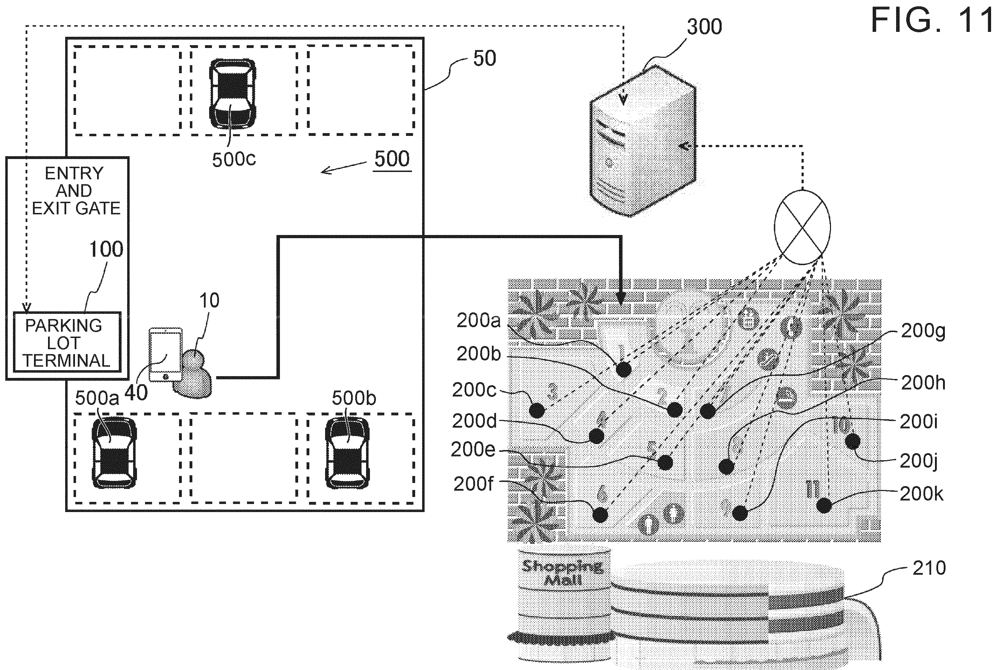

A first modification of the first embodiment will be described with reference to FIGS. 11 to 15. FIG. 11 illustrates a schematic configuration of an information processing system of the first modification. The information processing system according to the first modification includes a mobile terminal 40 of the user 10 of the vehicle 500 in addition to the configuration described in the first embodiment.

In the example described in the first embodiment, the store visit behavior of the user 10 is acquired using the ID card issued by the parking lot terminal 100 and the store terminal 200. In an example described below in the first modification, however, the store visit behavior of the user 10 is acquired using the mobile terminal 40 of the user 10 and the store terminal 200. In the first modification, the store visit behavior is acquired based on behavior information of the user 10 detected by a sensor capable of detecting the behavior of the user 10 in the member store 20 of the shopping mall 210.

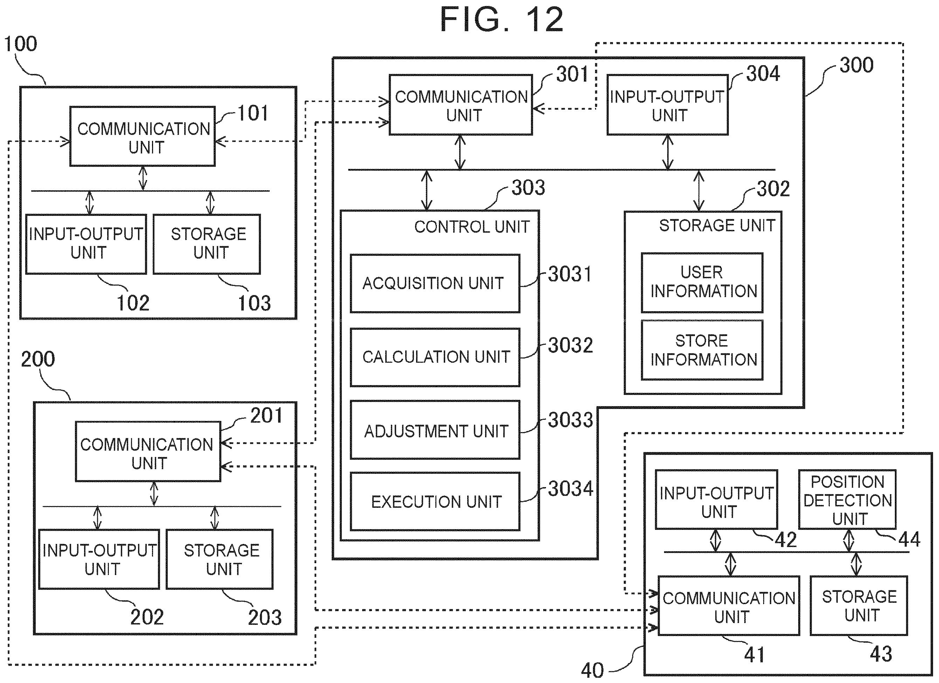

FIG. 12 more specifically illustrates the components of the parking lot terminal 100, the store terminal 200, and the server 300 included in the information processing system of the first modification. FIG. 12 also illustrates components of the mobile terminal 40 that communicates with the parking lot terminal 100, the store terminal 200, and the server 300. As shown in FIG. 12, the mobile terminal 40 includes a communication unit 41, an input-output unit 42, a storage unit 43, and a position detection unit 44 as functional units. The communication unit 41 is a communication interface for connecting the mobile terminal 40 to a network. The communication unit 41 includes, e.g., a network interface board and a wireless communication circuit for wireless communication. The input-output unit 42 is a functional unit for displaying information etc. received from the outside via the communication unit 41 and for inputting information when sending the information to the outside via the communication unit 201. The input-output unit 42 includes, e.g., a display device or a touch panel. Like the storage unit 302 of the server 300, the storage unit 43 includes a main storage device and an auxiliary storage device. The storage unit 43 stores user information that identifies the user 10 who has the mobile terminal 40. The user information is registered in advance using a predetermined application. The position detection unit 44 is a functional unit for detecting the position of the mobile terminal 40 and includes, e.g., a global positioning system (GPS) device.

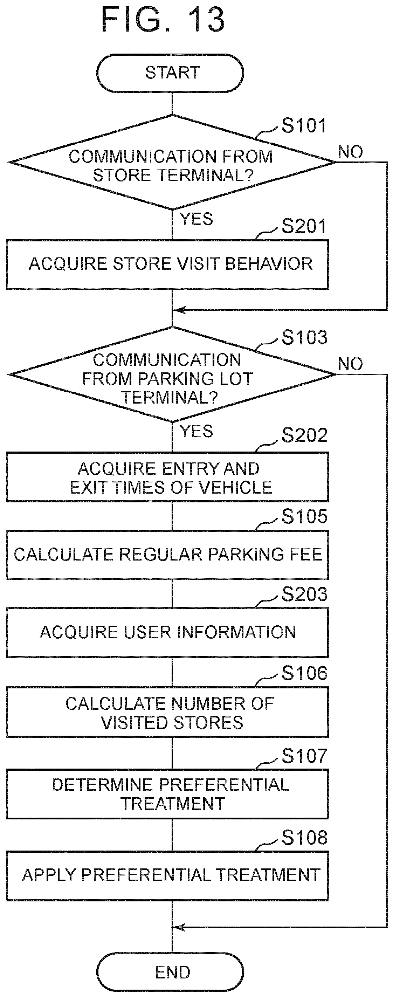

FIG. 13 is a flowchart of a process that is performed by the server 300 of the first modification to offer a preferential service to the user 10. This process is performed by the control unit 303 of the server 300. In the process of FIG. 13, the steps that are substantially the same as those of the process shown in FIG. 6 are denoted with the same signs, and detailed description thereof will be omitted.

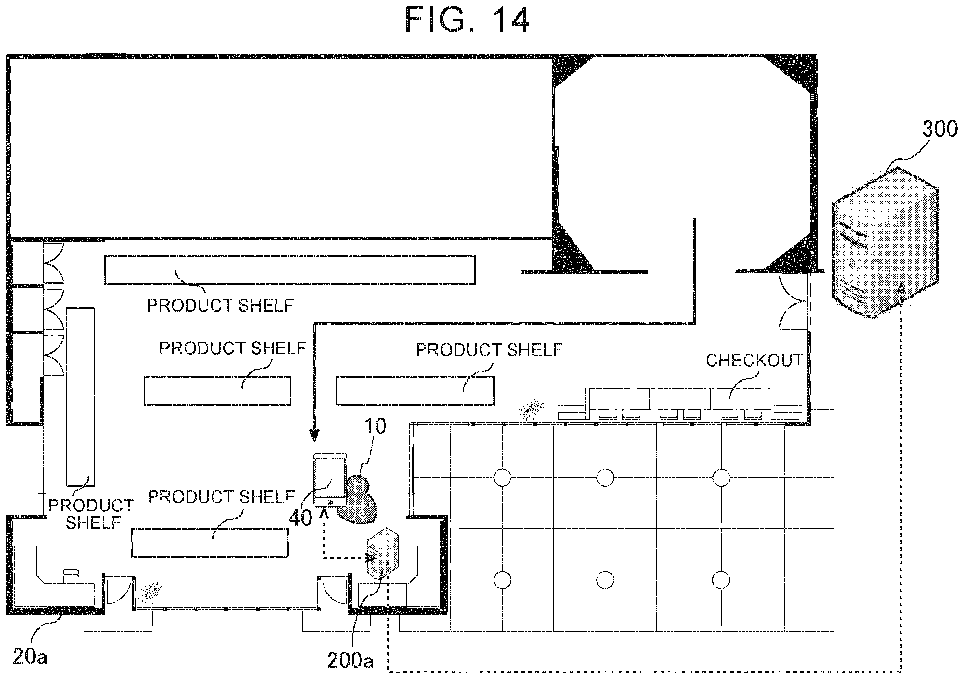

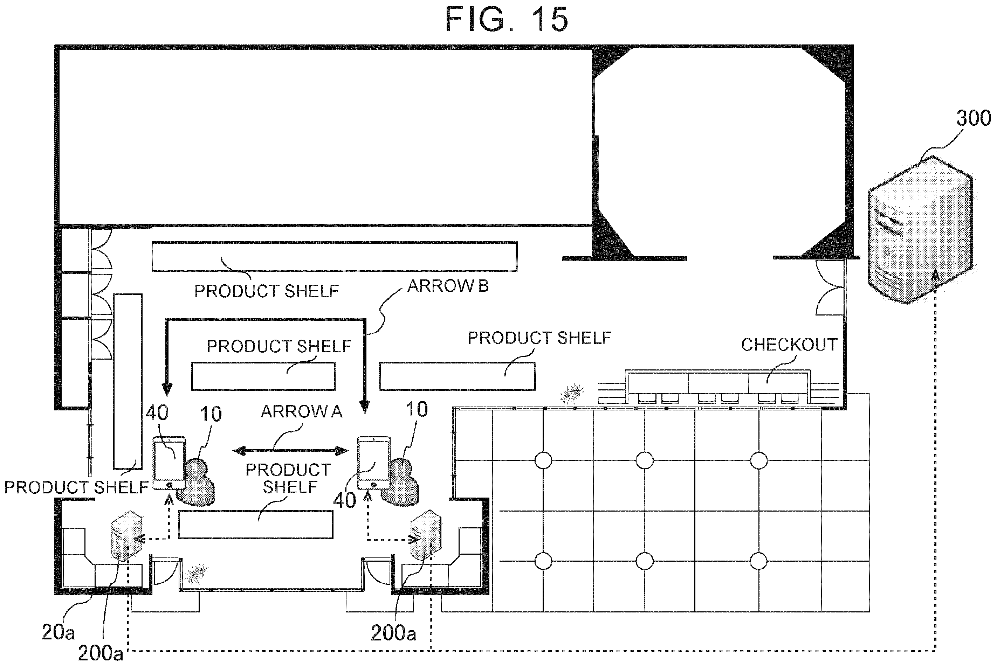

In the first modification, when YES in S101, the store visit behavior of the user 10 to visit the member store 20 is acquired in S201. Specifically, the acquisition unit 3031 of the control unit 303 acquires the store visit behavior of the user 10 to visit the member store 20 by acquiring behavior information of the user 10 in the member store 20 based on information detected by short-range wireless communication between the mobile terminal 40 of the user 10 and the store terminal 200. This will be described with reference to FIGS. 14 and 15.

FIG. 14 is a first diagram illustrating the behavior information of the user 10 that is acquired by short-range wireless communication between the mobile terminal 40 of the user 10 and the store terminal 200. As shown in FIG. 14, when the user 10 visiting the member store 20a passes a point where the store terminal 200a is installed in the member store 20a, the communication unit 41 of the mobile terminal 40 of the user 10 communicates with the communication unit 201 of the store terminal 200a via short-range wireless communication. These communication units transmit and receive data to and from each other according to, e.g., the Bluetooth (registered trademark) Low Energy standard (hereinafter referred to as BLE). BLE is a low-power communication standard based on Bluetooth (registered trademark) and has a feature that it does not require pairing between devices and communication can be immediately started when a partner device is detected. Although BLE is illustrated in the first modification, other wireless communication standards may be used. For example, Near Field Communication (NFC), Ultra Wideband (UWB), Wi-Fi (registered trademark), etc. may be used. The store terminal 200a acquires information detected by such short-range wireless communication and sends the information to the server 300. The information that is sent from the store terminal 200a of the member store 20a to the server 300 includes information stored in the mobile terminal 40 of the user 10 visiting the member store 20a, namely user information that identifies the user 10, and store information that identifies the member store 20a.

The acquisition unit 3031 of the control unit 303 of the server 300 acquires the behavior information of the user 10 in the member store 20a, based on the information sent from the store terminal 200a of the member store 20a. In this case, the behavior information of the user 10 is information that the user 10 has passed a predetermined point (the point where the store terminal 200a is installed) in the member store 20a. The acquisition unit 3031 acquires the store visit behavior of the user 10 to visit the member store 20a, based on the acquired behavior information. That is, the acquisition unit 3031 determines that the user 10 has visited the member store 20a based on the information that the user 10 has passed the predetermined point (the point where the store terminal 200a is installed) in the member store 20a, and acquires the store visit behavior of the user 10 to visit the member store 20a. In this case, the communication unit 41 of the mobile terminal 40 is an example of the first sensor according to the invention, and the communication unit 201 of the store terminal 200a is an example of the second sensor according to the invention.

FIG. 15 is a second diagram illustrating the behavior information of the user 10 that is acquired by short-range wireless communication between the mobile terminal 40 of the user 10 and the store terminal 200. As shown in FIG. 15, when the user 10 visiting the member store 20a passes a point where the store terminal 200a is installed in the member store 20a, the communication unit 41 of the mobile terminal 40 of the user 10 communicates with the communication unit 201 of the store terminal 200a via short-range wireless communication. Unlike FIG. 14, two store terminals 200a are installed in the member store 20a in FIG. 15. In this case, when the user 10 has moved along a predetermined flow line including predetermined points (points where the store terminals 200a are installed) in the member store 20a, the acquisition unit 3031 determines that the user 10 has visited the member store 20a. In FIG. 15, the flow line connecting the two store terminals 200a is shown by arrow A or arrow B. In the case where each store terminal 200a has communicated with the mobile terminal 40 of the user 10 via short-range wireless communication, the acquisition unit 3031 determines that the user 10 has moved along the flow line shown by arrow A or arrow B in the member store 20a and determines that the user 10 has visited the member store 20a. The acquisition unit 3031 then acquires behavior information that the user 10 has moved along the predetermined flow line (arrow A or arrow B in FIG. 15) including the predetermined points (the points where the store terminals 200a are installed) in the member store 20a, and acquires the store visit behavior of the user 10 to visit the member store 20a based on the acquired behavior information.

Referring back to FIG. 13, in S201, the acquisition unit 3031 that has acquired the information sent from the store terminal 200a associates the user information and the store information that are included in this information with each other and stores the user information and the store information in the storage unit 302 of the server 300. After S201 is finished, the routine proceeds to S103.

In the first modification, when YES in S103, the entry time and the exit time of the vehicle 500 are acquired in S202. In the first modification, when the vehicle 500 enters the parking lot 50, the parking lot terminal 100 issues an entry card to the user 10 of the vehicle 500. The entry card has recorded thereon the entry time of the vehicle 500 to the parking lot 50. When the vehicle 500 leaves the parking lot 50, the user 10 of the vehicle 500 inputs the entry card to the parking lot terminal 100. Data including the entry time of the vehicle 500 recorded on the entry card and the time the entry card was collected (exit time of the vehicle 500) is then sent from the parking lot terminal 100 to the server 300. The control unit 303 of the server 300 acquires the entry and exit times of the vehicle 500 by acquiring the data from the parking lot terminal 100 via the communication unit 301. The control unit 303 can calculate the parking time of the vehicle 500 in the parking lot 50 based on the acquired entry and exit times of the vehicle 500. After S202 is finished, the routine proceeds to S105.

In the first modification, after S105 is finished, the user information that identifies the user 10 who has the mobile terminal 40 is acquired in S203. The mobile terminal 40 is configured to communicate with the parking lot terminal 100. As described above, when the user 10 of the vehicle 500 inputs the entry card to the parking lot terminal 100, the data described above is sent from the parking lot terminal 100 to the server 300. For example, when the user 10 of the vehicle 500 inputs the entry card to the parking lot terminal 100, the user 10 causes his or her mobile terminal 40 to communicate with the parking lot terminal 100 via short-range wireless communication. The user information of the user 10 can thus be sent together with the data described above from the parking lot terminal 100 to the server 300. The control unit 303 of the server 300 acquires the user information by acquiring the data sent in this manner. After S203 is finished, the routine proceeds to S106. In S106, the number of visited stores is calculated for the user 10 having the user information acquired in S203. The control unit 303 calculates the number of visited stores by the user having the user information by comparing the information acquired and stored in the storage unit 302 in S201 (the user information and store information stored in association with each other) with the user information acquired in S203.

As in the first embodiment described above, the larger the number of visited stores by the user 10 of the vehicle 500 parked in the parking lot 50 associated with the shopping mall 210, the higher the discount rate of the fee for using the parking lot 50 by the user 10 is set, and the discount rate is applied to the parking fee to be paid by the user 10. The user 10 is thus more motivated to visit more member stores 20 of the shopping mall 210. The users of the parking lot 50 associated with the shopping mall 210 can therefore be encouraged to visit the member stores 20 of the shopping mall 210. In the first modification, the store visit behavior of the user 10 is acquired without operating the store terminal 200 by the user 10. It is therefore easier to acquire the store visit behavior of the user 10 in terms of visiting more member stores 20 of the shopping mall 210. Accordingly, the convenience for the user 10 is increased.

### Second Modification of First Embodiment

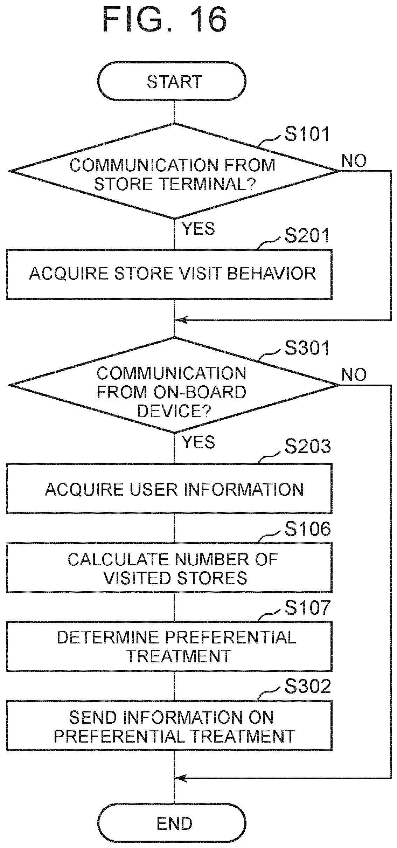

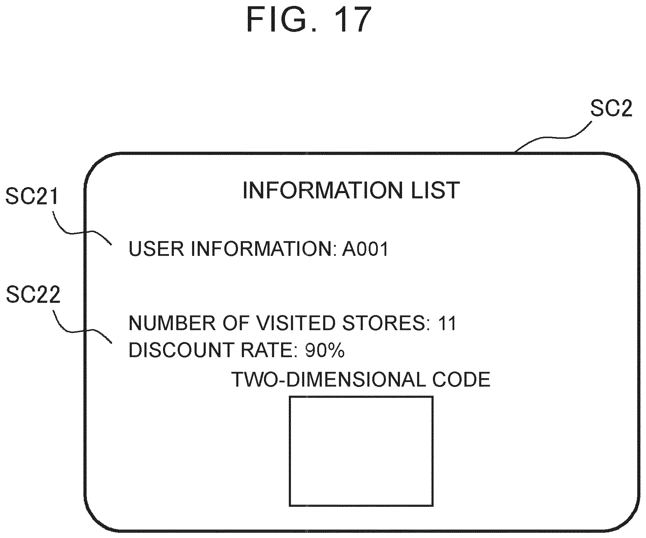

A second modification of the first embodiment will be described with reference to FIGS. 16 and 17. In the example described in the first embodiment, the information on the preferential service to be offered to the user 10 of the vehicle 500 is notified to the user 10 via the input-output unit 102 of the parking lot terminal 100. In an example described below in the second modification, however, the information on the preferential service to be offered to the user 10 of the vehicle 500 is sent to the mobile terminal 40 of the user 10 to notify the user 10 of this information. In the second modification, as in the first modification of the first embodiment, the store visit behavior of the user 10 is acquired using the mobile terminal 40 of the user 10 and the store terminal 200.

FIG. 16 is a flowchart of a process that is performed by the server 300 of the second modification to offer a preferential service to the user 10. This process is performed by the control unit 303 of the server 300. In the process of FIG. 16, the steps that are substantially the same as those of the processes shown in FIGS. 6 and 13 are denoted with the same signs, and detailed description thereof will be omitted.

In the second modification, after S201 is finished, it is determined in S301 whether there has been communication from an on-board device 510 of the vehicle 500. The on-board device 510 includes a communication unit 511 as a functional unit and is configured to communicate with the server 300 and the mobile terminal 40 of the user 10. The communication unit 511 of the on-board device 510 is a communication interface for connecting the vehicle 500 to a network and includes, e.g., a network interface board and a wireless communication circuit for wireless communication. The control unit 303 of the server 300 determines whether there has been communication from the on-board device 510 by determining whether data has been sent from the on-board device 510 to the communication unit 301. The transmission of the data from the on-board device 510 to the server 300 is triggered by short-range wireless communication between the on-board device 510 and the mobile terminal 40. This will be described below.

As described in the first modification of the first embodiment, when the mobile terminal 40 of the user 10 and the store terminal 200 communicate with each other via short-range wireless communication in the member store 20 of the shopping mall 210, information detected by the short-range wireless communication is sent from the store terminal 200 to the server 300. In the second modification, when the user 10 who visited the member store(s) 20 returns to his or her vehicle 500 parked in the parking lot 50, the mobile terminal 40 of the user 10 and the on-board device 510 of the vehicle 500 communicate with each other via short-range wireless communication, and information detected by the short-range wireless communication is sent from the on-board device 510 to the server 300. In this case, it is highly probable that the user 10 who has returned to the vehicle 500 will drive the vehicle 500 out of the parking lot 50. Accordingly, the server 300 that has received the data performs the process of offering the preferential service to the user 10.

When the mobile terminal 40 of the user 10 and the on-board device 510 of the vehicle 500 communicate with each other via short-range wireless communication, user information stored in the mobile terminal 40 is sent to the on-board device 510. The data that is sent from the on-board device 510 to the server 300 includes this user information. The control unit 303 of the server 300 can acquire the user information in S203 that is performed when YES in S301.

In the second modification, after S107 is finished, information on the preferential service determined in S107 is sent to the mobile terminal 40 of the user 10 in S302. FIG. 17 illustrates the information on the preferential service that is sent to the mobile terminal 40 of the user 10. The information list shown in FIG. 17 is displayed on the display device etc. of the mobile terminal 40 by a predetermined application. As shown in FIG. 17, information SC21 on the user and information SC22 on the preferential service are displayed on an information list screen SC2. The information SC21 on the user is the information acquired by the control unit 303 in S203. As shown in FIG. 17, the number of visited stores, the discount rate, and a two-dimensional code are displayed on the information list screen SC2 as the information SC22 on the preferential service. The two-dimensional code has information on the discount rate recorded thereon and can be read by the parking lot terminal 100 described later. The user 10 is thus notified of the discount rate, and the two-dimensional code to be used to calculate the discounted parking fee is sent to the mobile terminal 40 of the user 10. The user 10 can therefore recognize that the preferential service will be offered to him or her. The user 10 is thus more motivated to visit more member stores 20 of the shopping mall 210. The users of the parking lot 50 associated with the shopping mall 210 can therefore be encouraged to visit the member stores 20 of the shopping mall 210.

As in the first modification of the first embodiment, the parking fee is calculated based on the information recorded on the entry card issued by the parking lot terminal 100 etc. In the second modification, the parking lot terminal 100 calculates the parking fee. Specifically, the parking lot terminal 100 calculates a regular parking fee based on the entry and exit times of the vehicle 500. The parking lot terminal 100 can also calculate the discounted parking fee by reading the information on the preferential service sent to the mobile terminal 40 of the user 10 in S302, namely the two-dimensional code having the information on the discount rate recorded thereon.

### Third Modification of First Embodiment

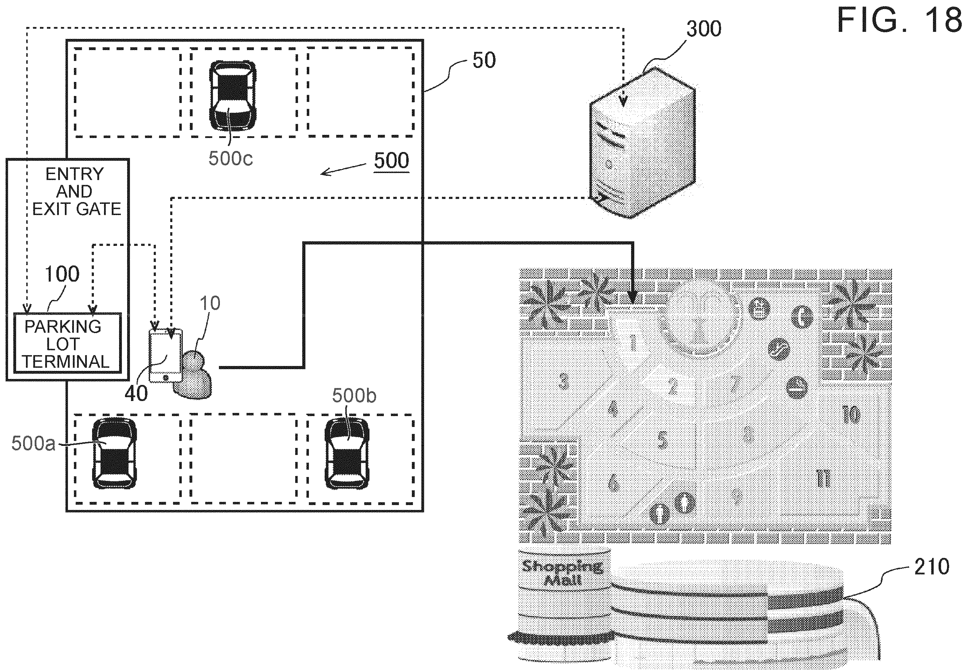

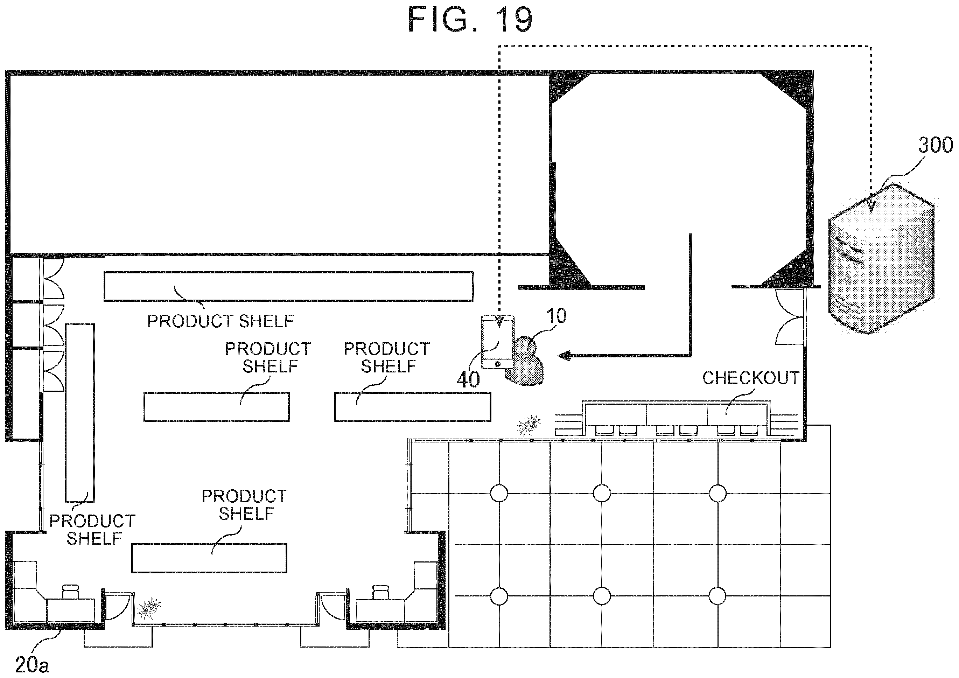

A third modification of the first embodiment will be described with reference to FIGS. 18 and 19. FIG. 18 illustrates a schematic configuration of an information processing system of the third modification. The information processing system according to the third modification includes the parking lot terminal 100 installed in the parking lot 50, the mobile terminal 40 of the user 10 of the vehicle 500, and the server 300. The mobile terminal 40 is configured similarly to that of the first modification of the first embodiment and can communicate with the parking lot terminal 100 and the server 300.

In the example described in the first embodiment, the store visit behavior of the user 10 is acquired using the ID card issued by the parking lot terminal 100 and the store terminal 200. In an example described below in the third modification, however, the store visit behavior of the user 10 is acquired using the mobile terminal 40 of the user 10. In the third modification, the parking lot terminal 100 issues neither an ID card nor an entry card, and the entry and exit of the vehicle 500 is managed by short-range wireless communication between the parking lot terminal 100 and the mobile terminal 40 of the user 10.

The management of the entry and exit of the vehicle 500 will be described in detail. When the vehicle 500 enters the parking lot 50, the mobile terminal 40 of the user 10 of the vehicle 500 communicates with the parking lot terminal 100 via short-range wireless communication, and information detected by the short-range wireless communication is sent from the mobile terminal 40 to the server 300. The information that is sent from the mobile terminal 40 to the server 300 includes the user information that identifies the user 10 who has the mobile terminal 40 and the entry time of the vehicle 500 to the parking lot 50. When the vehicle 500 leaves the parking lot 50, the mobile terminal 40 of the user 10 of the vehicle 500 also communicates with the parking lot terminal 100 via short-range wireless communication, and information detected by the short-range wireless communication is sent from the parking lot terminal 100 to the server 300. The server 300 that has received the information from the parking lot terminal 100 performs the process of offering the preferential service to the user 10 of the vehicle 500, and sends to the parking lot terminal 100 information on the parking fee to which the preferential service has been applied. The information that is sent from the parking lot terminal 100 to the server 300 when the vehicle 500 leaves the parking lot 50 includes the user information of the user 10 and the exit time of the vehicle 500 from the parking lot 50 which are acquired by the parking lot terminal 100 communicating with the mobile terminal 40 of the user 10 via short-range wireless communication. The server 300 can verify the user 10 and calculate the parking time, based on the user information, the exit time, and the information acquired from the mobile terminal 40 of the user 10 when the vehicle 500 enters the parking lot 50.

FIG. 19 illustrates behavior information of the user 10 that is acquired based on position information of the user 10 detected by the position detection unit 44 of the mobile terminal 40 of the user 10. As shown in FIG. 19, the position information of the user 10 visiting the member store 20a is sent from the mobile terminal 40 to the server 300. In addition to the position information, the mobile terminal 40 sends user information of the user 10 who has the mobile terminal 40 to the server 300. The server 300 can therefore associate this user information with the user information sent from the mobile terminal 40 when the vehicle 500 entered the parking lot 50.

The acquisition unit 3031 of the control unit 303 of the server 300 acquires behavior information of the user 10 in the member store 20a based on the position information of the user 10 sent from the mobile terminal 40 of the user 10. More specifically, the acquisition unit 3031 acquires the behavior information that the user 10 has visited the member store 20a by comparing position information indicating the location of the member store 20a with the position information of the user 10. The acquisition unit 3031 acquires the store visit behavior of the user 10 to visit the member store 20a based on the acquired behavior information. In this case, the position detection unit 44 of the mobile terminal 40 is an example the sensor according to the invention.

As in the first embodiment, the larger the number of visited stores by the user 10 of the vehicle 500 parked in the parking lot 50 associated with the shopping mall 210, the higher the discount rate of the fee for using the parking lot 50 by the user 10 is set, and the discount rate is applied to the parking fee to be paid by the user 10. The user 10 is thus more motivated to visit more member stores 20 of the shopping mall 210. The users of the parking lot 50 associated with the shopping mall 210 can therefore be encouraged to visit the member stores 20 of the shopping mall 210. In the third modification, the store visit behavior of the user 10 is acquired without operating the store terminal 200 by the user 10. It is therefore easier to acquire the store visit behavior of the user 10 in terms of visiting more member stores 20 of the shopping mall 210. Accordingly, the convenience for the user 10 is increased.

The acquisition unit 3031 may acquire the behavior information of the user 10 in view of the user 10's length of stay in the member store 20a. In this case, the acquisition unit 3031 calculates the length of time the user 10 stayed in the member store 20a, namely the user 10's length of stay in the member store 20a, by continuously comparing the position information indicating the location of the member store 20a with the position information of the user 10. In the case where the user 10's length of stay in the member store 20a is equal to or longer than a predetermined time (e.g., 3 minutes), the acquisition unit 3031 may acquire the behavior information of the user 10 by determining that the user 10 has visited the member store 20a. This makes it easier for the acquisition unit 3031 to determine that the user 10 has visited the member store 20a, as compared to the case where the user 10's length of stay in the member store 20a is not considered.

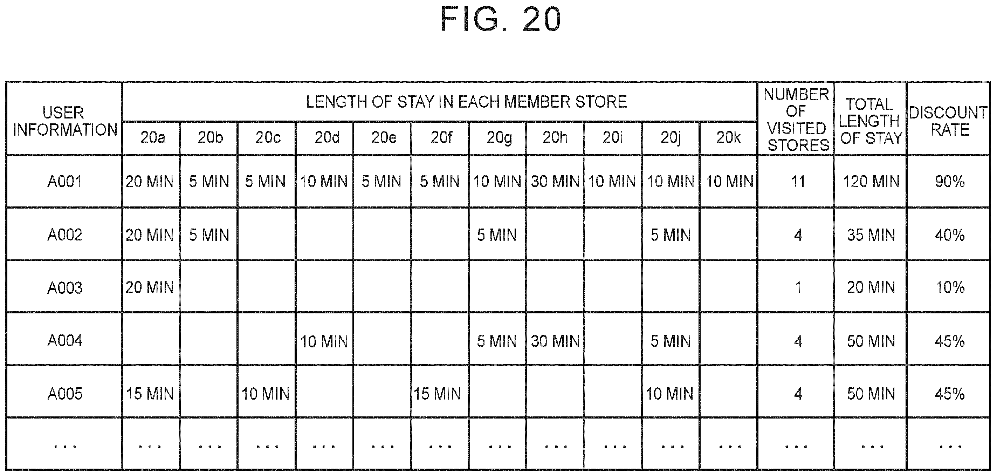

In the third modification, the preferential service may be adjusted so that, for the users with the same number of visited stores among the users 10 of the vehicles 500, the user whose length of stay in the member stores 20 is longer will get a higher level of preferential service. This will be described with reference to FIG. 20.

FIG. 20 illustrates the discount rate that is determined based on the length of stay in the member stores 20 in addition to the number of visited member stores 20 of the shopping mall 210. As shown in FIG. 20, the user with user information A001 visited 11 member stores 20 and this user's total length of stay in the member stores 20 is 120 minutes. The user with user information A002 visited four member stores 20 and this user's total length of stay in the member stores 20 is 35 minutes. In this case, the discount rate is adjusted so that, among the users 10 of the vehicles 500, the user with a larger number of visited stores will get a higher discount rate. Accordingly, the discount rate (90%) for the user with the user information A001 is higher than the discount rate (40%) for the user with the user information A002.

The user with the user information A002, the user with user information A004, and the user with user information A005 visited four member stores 20. Namely, the user with the user information A002, the user with the user information A004, and the user with the user information A005 have the same number of visited stores. In this case, the adjustment unit 3033 of the control unit 303 of the server 300 may apply the same discount rate to these users based on the number of visited member stores 20. Alternatively, as shown in FIG. 20, the adjustment unit 3033 may adjust the discount rate based on the discount rate determined based on the number of visited stores and the length of stay in the member stores 20. In this case, as shown in FIG. 20, the adjustment unit 3033 can adjust the discount rate so that the discount rate (45%) for the user with the user information A004 and the user with the user information A005 whose total length of stay in the member stores 20 is longer than the user with the user information A002 is higher than the discount rate (40%) for the user with the user information A002.

For the users 10 with the same number of visited stores and the same total length of stay in the member stores 20, the adjustment unit 3033 may adjust the discount rate based on the length of stay in each member store 20. As shown in FIG. 20, the user with the user information A004 stayed in the member store 20h for 30 minutes and stayed in the member store 20g and the member store 20j for 5 minutes each. The difference between the longest length of stay (the length of stay in the member store 20h) and the shortest length of stay (the length of stay in each member store 20g, 20j) is 25 minutes. For the user with the user information A005, on the other hand, the difference between the longest length of stay (the length of stay in each member store 20a, 20f) and the shortest length of stay (the length of stay in each member store 20c, 20j) is 5 minutes. In this case, for example, the adjustment unit 3033 may adjust the discount rate so that the discount rate for the user with the user information A005 who has a small difference between the lengths of stay in each member store 20 is higher than the discount rate for the user with the user information A004 who has a large difference between the lengths of stay in each member store 20.

### Fourth Modification of First Embodiment

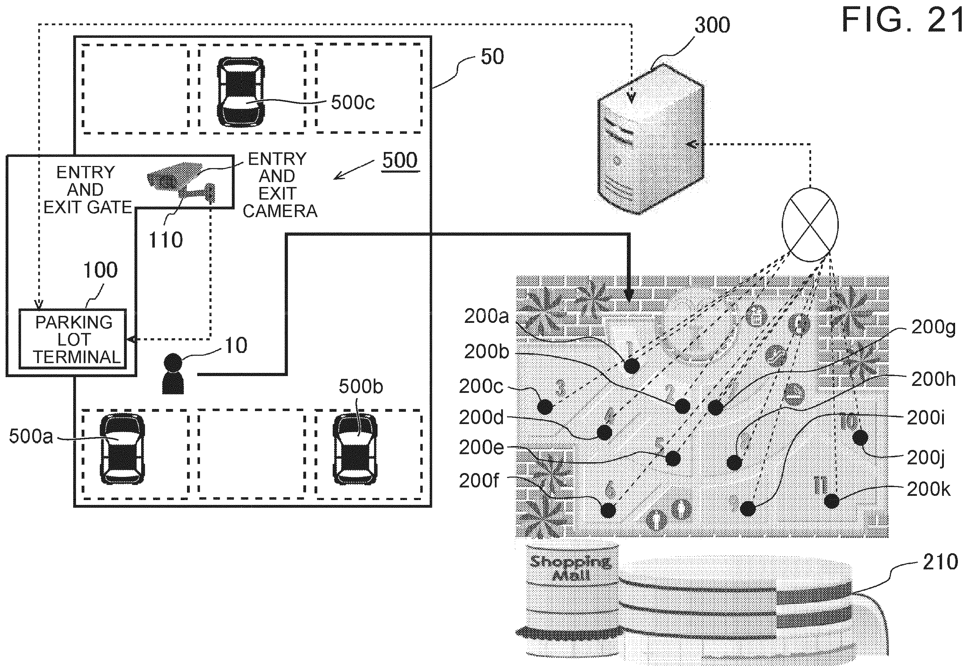

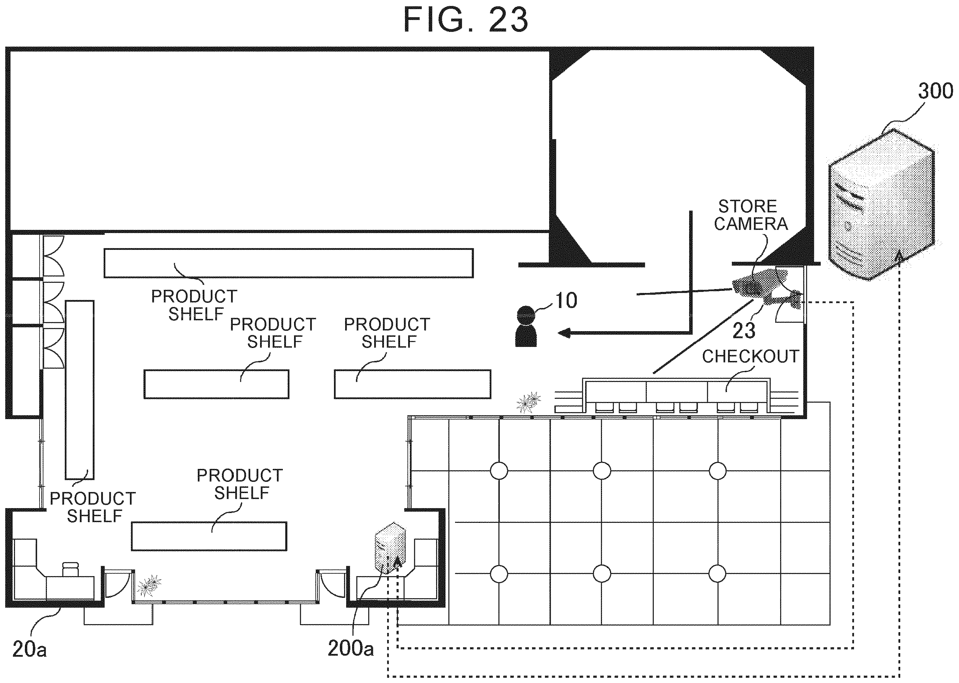

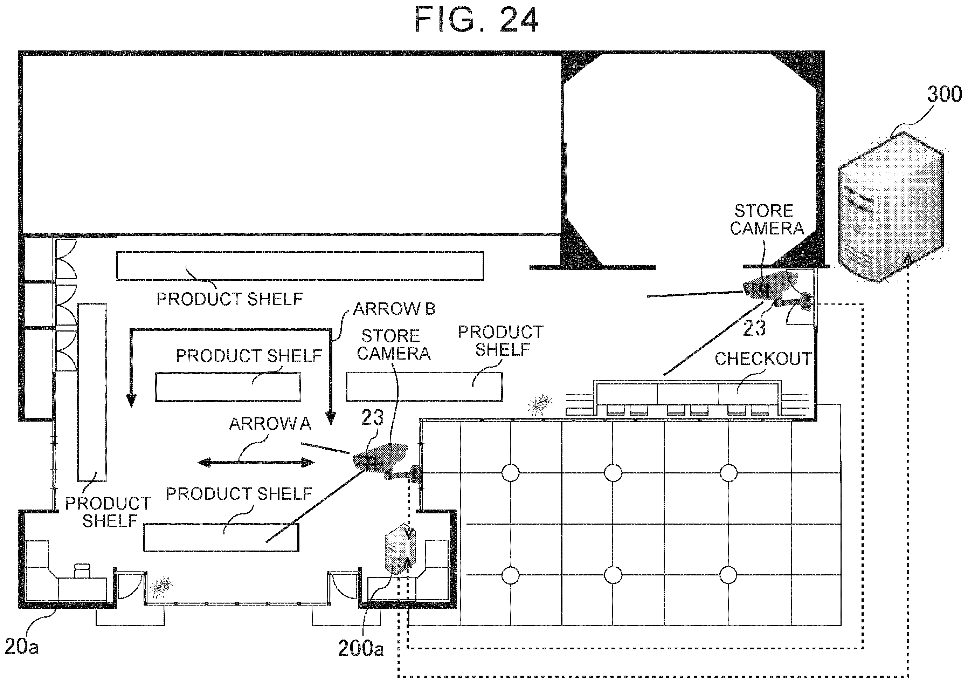

A fourth modification of the first embodiment will be described with reference to FIGS. 21 to 24. FIG. 21 illustrates a schematic configuration of the information processing system of the fourth modification. The information processing system according to the fourth modification includes an entry and exit camera 110 in addition to the configuration shown in the first embodiment. As shown in FIGS. 23 and 24 described later, the information processing system according to the fourth modification further includes store cameras 23 installed in each member store 20 of the shopping mall 210.

For example, the entry and exit camera 110 and the store cameras 23 are imaging devices using an image sensor such as a charged-coupled device (CCD) image sensor, a metal-oxide-semiconductor (MOS) image sensor, or a complementary metal-oxide-semiconductor (CMOS) image sensor. The entry and exit camera 110 can detect the face of the user of a vehicle entering or leaving the parking lot 50 in an image (still or moving image). The store camera 23 can detect the face of the user visiting the member store 20 in an image (still or moving image).

In the example described in the first embodiment, the store visit behavior of the user 10 is acquired using the ID card issued by the parking lot terminal 100 and the store terminal 200. In an example described below in the fourth modification, however, the store visit behavior of the user 10 is acquired using the store camera 23 configured to communicate with the store terminal 200. In the fourth modification, the parking lot terminal 100 issues neither an ID card nor an entry card, and the entry and exit of the vehicle 500 is managed using the entry and exit camera 110 configured to communicate with the parking lot terminal 100.

The management of the entry and exit of the vehicle 500 will be described in detail. When the vehicle 500 enters the parking lot 50, the entry and exit camera 110 detects a face image of the user 10 of the vehicle 500 and sends the face image to the parking lot terminal 100. The parking lot terminal 100 sends information on the acquired face image of the user 10 to the server 300 as facial recognition information of the user 10. The information that is sent from the parking lot terminal 100 to the server 300 includes the entry time of the vehicle 500 to the parking lot 50 in addition to the facial recognition information of the user 10. The information thus sent to the server 300 is stored in the storage unit 302 of the server 300. When the vehicle 500 leaves the parking lot 50, the entry and exit camera 110 also detects a face image of the user 10 of the vehicle 500 and sends the face image to the parking lot terminal 100. The parking lot terminal 100 sends information on the acquired face image of the user 10 to the server 300 as facial recognition information of the user 10. The information that is sent from the parking lot terminal 100 to the server 300 includes the exit time of the vehicle 500 from the parking lot 50 in addition to the facial recognition information of the user 10. The server 300 can verify the user 10 and calculate the parking time, based on the information acquired from the parking lot terminal 100.

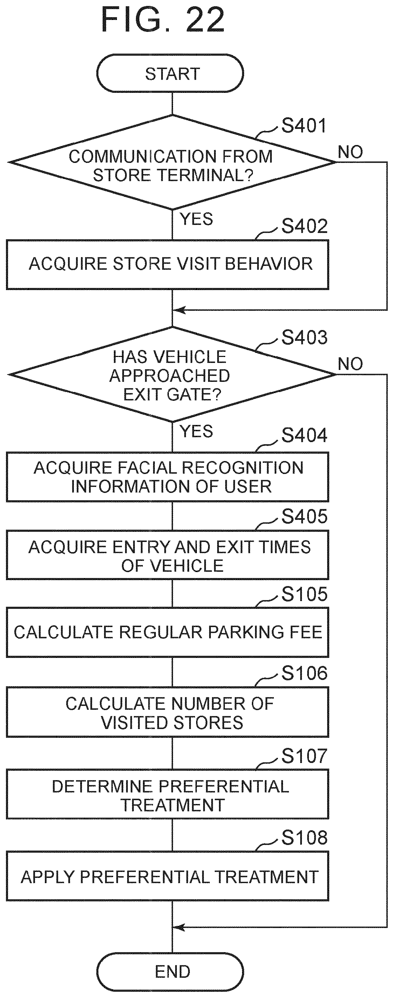

FIG. 22 is a flowchart of a process that is performed by the server 300 of the fourth modification to offer a preferential service to the user 10. This process is performed by the control unit 303 of the server 300. In the process of FIG. 22, the steps that are substantially the same as those of the process shown in FIG. 6 are denoted with the same signs, and detailed description thereof will be omitted.

First, in S401, it is determined whether there has been communication from the store terminal 200. When the store camera 23 detects the face of the user 10 visiting the member store 20 in an image, the store camera 23 sends the face image to the store terminal 200. The store terminal 200 then sends information on the acquired face image of the user 10 to the server 300 as facial recognition information of the user 10. The control unit 303 of the server 300 determines whether there has been communication from the store terminal 200 by determining whether data has been sent from the store terminal 200 to the communication unit 301. When YES in S401, the routine proceeds to S402. When NO in S401, the routine proceeds to S403.

When YES in S401, the store visit behavior of the user 10 to visit the member store 20 is acquired in S402. The acquisition unit 3031 of the control unit 303 acquires the store visit behavior of the user 10 to visit the member store 20 by acquiring behavior information of the user 10 in the member store 20 based on the first recognition information that is the facial recognition information of the user 10 detected by the store camera 23. This will be described with reference to FIGS. 23 and 24.

FIG. 23 is a first diagram illustrating the behavior information of the user 10 that is acquired based on the first recognition information detected by the store camera 23. As shown in FIG. 23, the store camera 23 is installed in the member store 20a. When the user 10 visits the member store 20a, the store camera 23 detects the face image of the user 10. The store terminal 200a acquires the detected face image of the user 10 and sends information on the face image to the server 300 as the first recognition information (the facial recognition information of the user 10). The information that is sent from the store terminal 200a of the member store 20a to the server 300 includes the first recognition information and store information that identifies the member store 20a.

The acquisition unit 3031 then acquires the behavior information of the user 10 in the member store 20a based on the information sent from the store terminal 200a of the member store 20a. In this case, the behavior information of the user 10 is information that the user 10 has passed a predetermined point in the member store 20a (e.g., a point where the store camera 23 can detect the face image of the user 10 visiting the member store 20a). The acquisition unit 3031 also performs facial authentication of the user 10 by comparing the facial recognition information of the user 10 stored in the storage unit 302, namely the facial recognition information of the user 10 detected by the entry and exit camera 110 when the vehicle 500 entered the parking lot 50 (second recognition information), with the first recognition information. The acquisition unit 3031 can thus specify that the user 10 visiting the member store 20a is the user who parked the vehicle 500 in the parking lot 50. The acquisition unit 3031 then acquires the store visit behavior of the user 10 to visit the member store 20a based on the acquired behavior information. In this case, the store camera 23 installed in the member store 20a is an example of the sensor according to the invention, and the entry and exit camera 110 installed in the parking lot 50 is an example the parking lot sensor according to the invention.

FIG. 24 is a second diagram illustrating the behavior information of the user 10 that is acquired based on the first recognition information detected by the store camera 23. As shown in FIG. 24, two store cameras 23 are installed in the member store 20a. The two store cameras 23 are installed at positions where the store cameras 23 can capture an image of regions including flow lines shown by arrows A, B in FIG. 24. In this case, the acquisition unit 3031 may acquire the behavior information that the user 10 has moved along the flow line shown by arrow A or arrow B in the member store 20a, and may acquire the store visit behavior of the user 10 to visit the member store 20a based on the acquired behavior information.

Referring back to FIG. 22, in S402, the acquisition unit 3031 that has acquired the information sent from the store terminal 200a associates the first recognition information and the store information that are included in this information with each other and stores the first recognition information and the store information in the storage unit 302 of the server 300. After S402 is finished, the routine proceeds to S403.

In S403, it is determined whether the vehicle 500 has approached the exit gate. The parking lot terminal 100 has an entry and exit detection sensor that detects that a vehicle has approached the entry and exit gate. The parking lot terminal 100 can detect a vehicle that is about to leave the parking lot 50 by using the entry and exit detection sensor. When the parking lot terminal 100 detects that the vehicle 500 has approached the exit gate, the parking lot terminal 100 sends the detection information to the server 300. The control unit 303 of the server 300 determines whether the vehicle 500 has approached the exit gate by determining whether the detection information has been sent from the parking lot terminal 100. When YES in S403, the routine proceeds to S404. When NO in S403, the process is ended.

When YES in S403, facial recognition information of the user 10 of the vehicle 500 that is about to leave the parking lot 50 is acquired in S404. As described above, a face image of the user 10 detected by the entry and exit camera 110 is sent from the parking lot terminal 100 to the server 300 as the facial recognition information of the user 10. The control unit 303 of the server 300 acquires the facial recognition information of the user 10 of the vehicle 500 that is about to leave the parking lot 50 by acquiring the data sent from the parking lot terminal 100. The control unit 303 can determine whether the user 10 is a user to which the preferential service is to be offered by comparing the facial recognition information of the user 10 thus acquired with the first recognition information stored in the storage unit 302. After S404 is finished, the routine proceeds to S405.

In S405, the entry and exit times of the vehicle 500 are acquired. The control unit 303 compares the facial recognition information of the user 10 acquired in S404 with the second recognition information stored in the storage unit 302. For the user 10 whose facial recognition information matches the second recognition information stored in the storage unit 302, the control unit 303 acquires the entry time of the vehicle stored in the storage unit 302. The control unit 303 also acquires the time it acquired the facial recognition information of the user 10 in S404 as the exit time of the vehicle 500. After S405 is finished, the routine proceeds to S105.

As in the first embodiment, the larger the number of visited stores by the user 10 of the vehicle 500 parked in the parking lot 50 associated with the shopping mall 210, the higher the discount rate of the fee for using the parking lot 50 by the user 10 is set, and the discount rate is applied to the parking fee to be paid by the user 10. The user 10 is thus more motivated to visit more member stores 20 of the shopping mall 210. The users of the parking lot 50 associated with the shopping mall 210 can therefore be encouraged to visit the member stores 20 of the shopping mall 210. In the fourth modification, the store visit behavior of the user 10 is acquired without operating the store terminal 200 by the user 10. It is therefore easier to acquire the store visit behavior of the user 10 in terms of visiting more member stores 20 of the shopping mall 210. Accordingly, the convenience for the user 10 is increased.

### Fifth Modification of First Embodiment

A fifth modification of the first embodiment will be described. In the second modification of the first embodiment, the information on the preferential service to be offered to the user 10 of the vehicle 500 is sent to the mobile terminal 40 of the user 10. In the fifth modification, however, the information regarding the preferential service to be offered to the user 10 of the vehicle 500 is sent to the on-board device 510 of the vehicle 500.

The on-board device 510 includes the communication unit 511, a position detection unit 512, and a storage unit 513 as functional units. The on-board device 510 may include functional units other than these functional units. The communication unit 511 is a communication interface for connecting the vehicle 500 to a network. The communication unit 511 includes, e.g., a network interface board and a wireless communication circuit for wireless communication. The position detection unit 512 is a functional unit for detecting the position of the vehicle 500 and includes, e.g., a GPS device. Like the storage unit 302 of the server 300, the storage unit 513 includes a main storage device and an auxiliary storage device. The storage unit 513 stores vehicle information that identifies the vehicle 500. The vehicle information is registered in advance using a predetermined application.

In the fifth modification as well, as in the second modification of the first embodiment, when the user 10 who visited the member store(s) 20 returns to his or her vehicle 500 parked in the parking lot 50, the mobile terminal 40 of the user 10 and the on-board device 510 of the vehicle 500 communicate with each other via short-range wireless communication, and information detected by the short-range wireless communication is sent from the on-board device 510 to the server 300. The server 300 then performs a process of offering a preferential service to the user 10.

In the process that is performed by the server 300 of the fifth modification to offer a preferential service to the user 10, information on the preferential service determined in S107 of FIG. 16 is sent to the on-board device 510 of the vehicle 500 in S302 of FIG. 16. When the vehicle 500 leaves the parking lot 50, the information on the preferential service sent to the on-board device 510 is sent to the parking lot terminal 100 by short-range wireless communication between the communication unit 511 of the on-board device 510 of the vehicle 500 and the communication unit 101 of the parking lot terminal 100. The preferential treatment process is thus performed. In this case, the communication unit 511 of the on-board device 510 of the vehicle 500 is an example of the third sensor according to the invention, the communication unit 101 of the parking lot terminal 100 installed in the parking lot 50 is an example of the fourth sensor according to the invention, and the parking lot terminal 100 that manages the parking lot 50 is an example of the management device according to the invention.

In the second modification of the first embodiment, when the parking lot terminal 100 calculates the parking fee, the parking lot terminal 100 calculates the discounted parking fee by reading the two-dimensional code information sent to the mobile terminal 40 of the user 10. In the fifth modification, on the other hand, the parking lot terminal 100 acquires the information on the preferential service from the on-board device 510 via the short-range wireless communication, and the preferential service is thus offered to the user 10.

### Second Embodiment

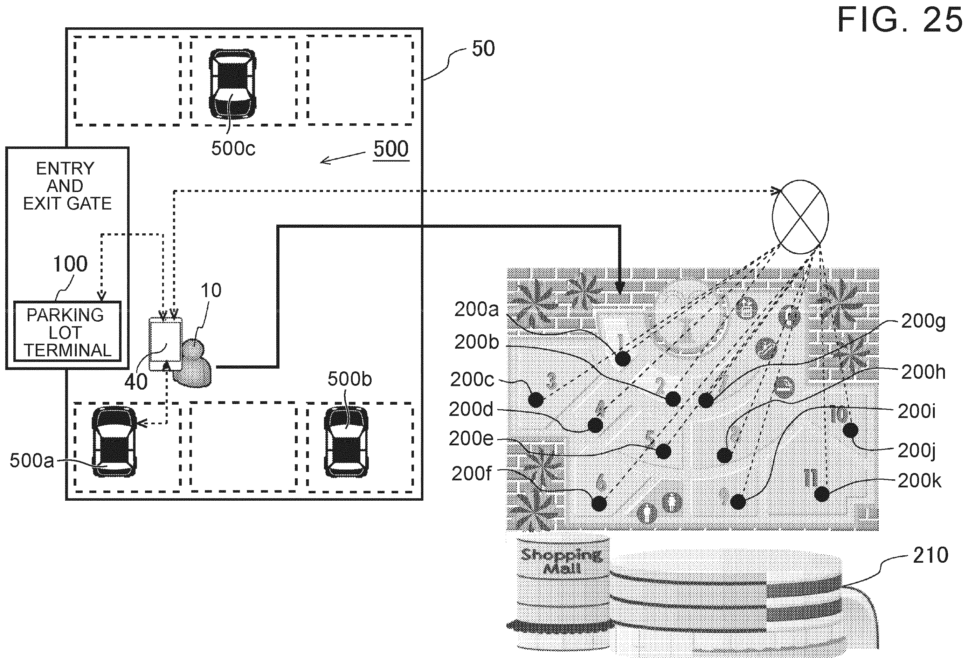

A second embodiment will be described with reference to FIGS. 25 to 27. FIG. 25 illustrates a schematic configuration of an information processing system of the second embodiment. The information processing system according to the second embodiment includes the parking lot terminal 100 installed in the parking lot 50, the store terminals 200 installed in the member stores 20 (member stores 20a to 20k corresponding to 1 to 11 in FIG. 25) of the shopping mall 210, and the mobile terminal 40 of the user 10 of the vehicle 500.

In the example described in the first embodiment, the server 300 performs the process of offering a preferential service to the user 10. In an example described below in the second embodiment, however, the mobile terminal 40 performs a process of offering a preferential service to the user 10.

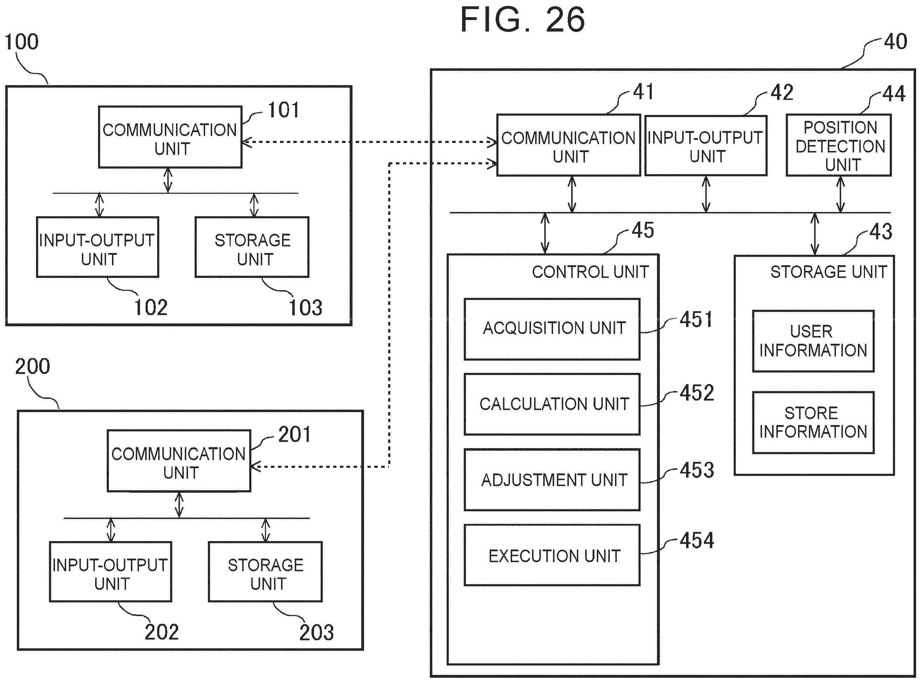

FIG. 26 illustrates in more detail the components of the mobile terminal 40 included in the information processing system of the second embodiment. FIG. 26 also illustrates the components of both the parking lot terminal 100 and the store terminal 200 that communicate with the mobile terminal 40.

A control unit 45 of the mobile terminal 40 is a functional unit in charge of controls that are performed by the mobile terminal 40. The control unit 45 can be implemented by an arithmetic processing unit such as a CPU. The control unit 45 includes four functional units, namely an acquisition unit 451, a calculation unit 452, an adjustment unit 453, and an execution unit 454. Each functional unit may be implemented by the CPU executing stored programs.

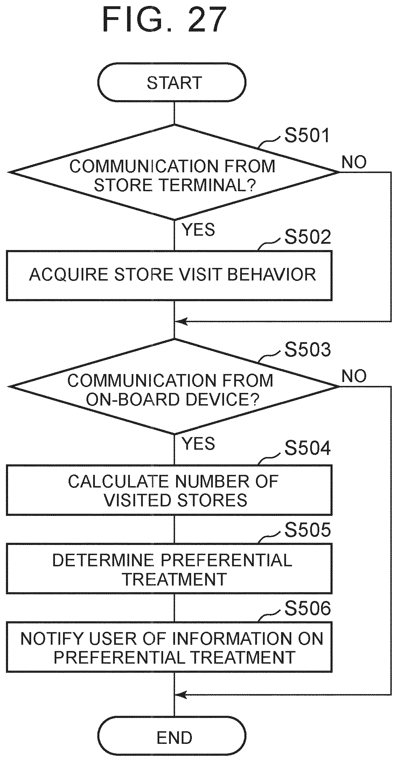

The process that is performed by the mobile terminal 40 to offer a preferential service to the user 10 will be described with reference to the flowchart of FIG. 27. This process is performed by the control unit 45 of the mobile terminal 40. In the second embodiment, as in the first modification of the first embodiment, the store visit behavior of the user 10 to visit the member store 20 is acquired by acquiring the behavior information of the user 10 in the member store 20 based on the information detected by short-range wireless communication between the mobile terminal 40 of the user 10 and the store terminal 200. As in the second modification of the first embodiment, when the user 10 who visited the member store(s) 20 returns to his or her vehicle 500 parked in the parking lot 50, the mobile terminal 40 of the user 10 and the on-board device 510 of the vehicle 500 communicate with each other via short-range wireless communication, and information detected by the short-range wireless communication is sent from the on-board device 510 to the server 300.

First, in S501, it is determined whether there has been communication from the store terminal 200. The control unit 45 determines whether there has been communication from the store terminal 200 by determining whether data has been sent from the store terminal 200 to the communication unit 41 of the mobile terminal 40. When YES in S501, the routine proceeds to S502. When NO in S501, the routine proceeds to S503.

When YES in S501, the store visit behavior of the user 10 to visit the member store 20 is then acquired in S502. The acquisition unit 451 of the control unit 45 of the mobile terminal 40 acquires the store visit behavior of the user 10 to visit the member store 20 by acquiring behavior information of the user 10 in the member store 20 based on the information detected by the short-range wireless communication between the mobile terminal 40 of the user 10 and the store terminal 200. The acquisition unit 451 stores store information of the member store 20 acquired by the short-range wireless communication in the storage unit 43 of the mobile terminal 40. After S502 is finished, the routine proceeds to S503.

In S503, it is determined whether there has been communication from the on-board device 510 of the vehicle 500. The control unit 45 of the mobile terminal 40 determines that there has been communication from the on-board device 510 of the vehicle 500 by determining whether data has been sent from the on-board device 510 to the communication unit 41. When YES in S503, the routine proceeds to S504. When NO in S503, the process is ended.

When YES in S503, the number of visited stores is then calculated in S504 for the user who has the mobile terminal 40 to which data has been sent from the on-board device 510. The calculation unit 452 of the control unit 45 of the mobile terminal 40 calculates the number of visited stores based on the store information acquired and stored in the storage unit 43 in S502. After S504 is finished, the routine proceeds to S505.

In S505, the preferential service is determined for the user who has the mobile terminal 40 to which data has been sent from the on-board device 510. The adjustment unit 453 of the control unit 45 of the mobile terminal 40 determines the preferential service to be offered to the user regarding the use of the parking lot 50, based on the number of visited stores calculated in S504. The adjustment unit 453 adjusts the preferential service so that the larger the number of visited stores by the user, the higher the level of the preferential service.

Next, in S506, information on the preferential service is notified to the user who has the mobile terminal 40 to which data has been sent from the on-board device 510. The execution unit 454 of the control unit 45 of the mobile terminal 40 notifies the user of the information on the preferential service determined in S505. The execution unit 454 displays, e.g., the information list screen SC2 shown in FIG. 17 on the display device etc. of the mobile terminal 40. In this case, the user 10 is notified of the discount rate via the information list screen SC2, and the two-dimensional code to be used to calculate the discounted parking fee is sent to the mobile terminal 40 of the user 10. The user 10 can therefore recognize that the preferential service will be offered to him or her. The user 10 is thus more motivated to visit more member stores 20 of the shopping mall 210. The users of the parking lot 50 associated with the shopping mall 210 can therefore be encouraged to visit the member stores 20 of the shopping mall 210.

### Third Embodiment

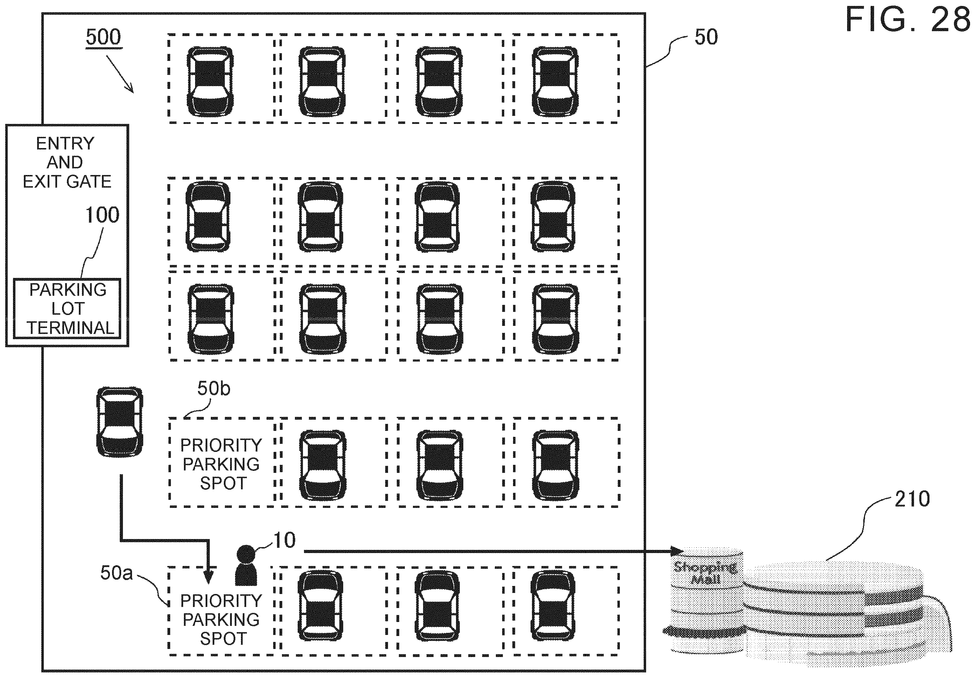

A third embodiment will be described with reference to FIGS. 28 to 31. In the example described in the first embodiment, a discount on the parking fee is applied as the preferential service for the user 10 of the vehicle 500. In an example described below in the third embodiment, however, a preferential service regarding a parking spot for the next or later visit is applied as the preferential service for the user 10 of the vehicle 500. That is, a preferential treatment process of providing the user 10 with preferential treatment according to the third embodiment is a process of preferentially providing the user 10 with a parking spot at the next or later visit. Specifically, the preferential treatment process is a process of notifying the user 10 who used the parking lot 50 that he or she is offered a service to preferentially get a parking spot at the next or later visit and sending predetermined information to be used when the user 10 uses this preferential service at the next or later visit. This will be described in detail.

In the third embodiment as well, as in the second modification of the first embodiment, when the user 10 who visited the member store(s) 20 returns to his or her vehicle 500 parked in the parking lot 50, the mobile terminal 40 of the user 10 and the on-board device 510 of the vehicle 500 communicate with each other via short-range wireless communication, and information detected by the short-range wireless communication is sent from the on-board device 510 to the server 300. The server 300 then performs a process of offering a preferential service to the user 10.

In the process that is performed by the server 300 of the third embodiment to offer a preferential service to the user 10, the preferential service is adjusted in S107 of FIG. 16 for the user with the user information acquired in S203. The adjustment unit 3033 of the control unit 303 adjusts the preferential service for this user based on the number of visited stores calculated in S106. Specifically, the adjustment unit 3033 adjusts the preferential service for this user so that the larger the number of visited stores, higher the level of the preferential service. In the third embodiment, the preferential service is adjusted so that the larger the number of visited stores, the higher the level of the preferential service regarding a parking spot for the next or later visit. This will be described with reference to FIGS. 28 to 30.

FIG. 28 is a first diagram illustrating the preferential service that is offered to the user 10 of the vehicle 500 in the third embodiment. In the third embodiment, as shown in FIG. 28, the next time the user 10 parks the vehicle 500 in the parking lot 50, a priority parking spot (parking spot 50a or 50b shown in FIG. 28) is provided to the user 10 as the preferential service regarding a parking spot for the next visit. Accordingly, even when the parking lot 50 is crowded and vehicles are waiting to enter the parking lot 50, the user 10 who gets the preferential service regarding a parking spot can park the vehicle 500 in the reserved priority parking spot.

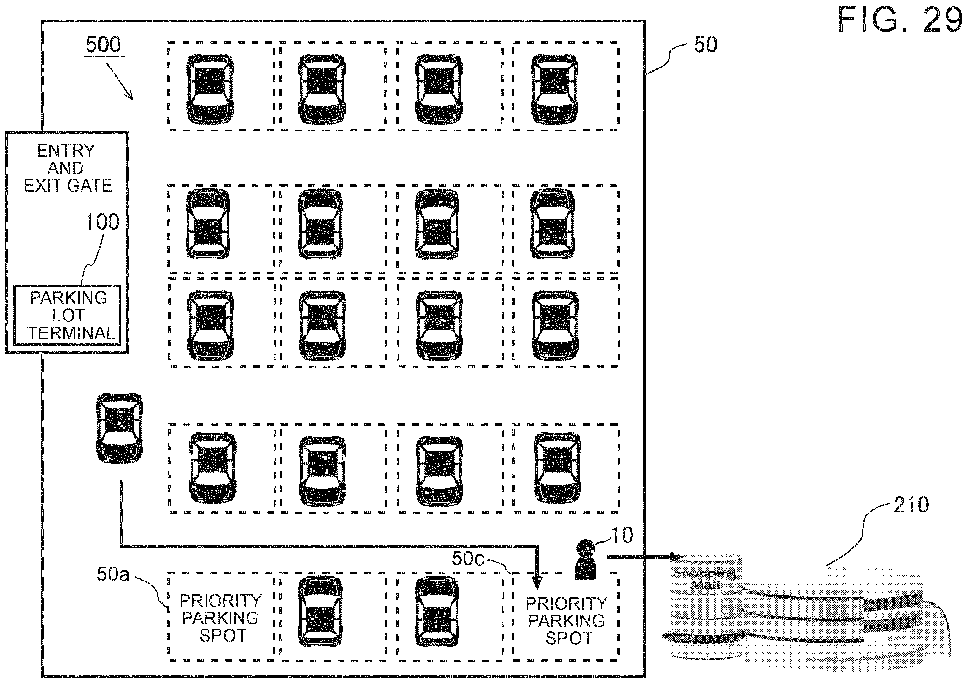

FIG. 29 is a second diagram illustrating the preferential service that is offered to the user 10 of the vehicle 500 in the third embodiment. As shown in FIG. 29, a priority parking spot 50c is located closer to the shopping mall 210 than the priority parking spot 50a. In this case, it is more convenient for the user who is provided with the priority parking spot 50c to visit the shopping mall 210 than for the user who is provided with the priority parking spot 50a. That is, the user who is provided with the priority parking spot 50c gets a higher level of the preferential service regarding a parking spot than the user who is provided with the priority parking spot 50a. Regarding this preferential service that provides the user 10 with a priority parking spot, the adjustment unit 3033 adjusts the preferential service so that the user with a larger number of visited stores is provided with a priority parking spot located closer to the shopping mall 210.

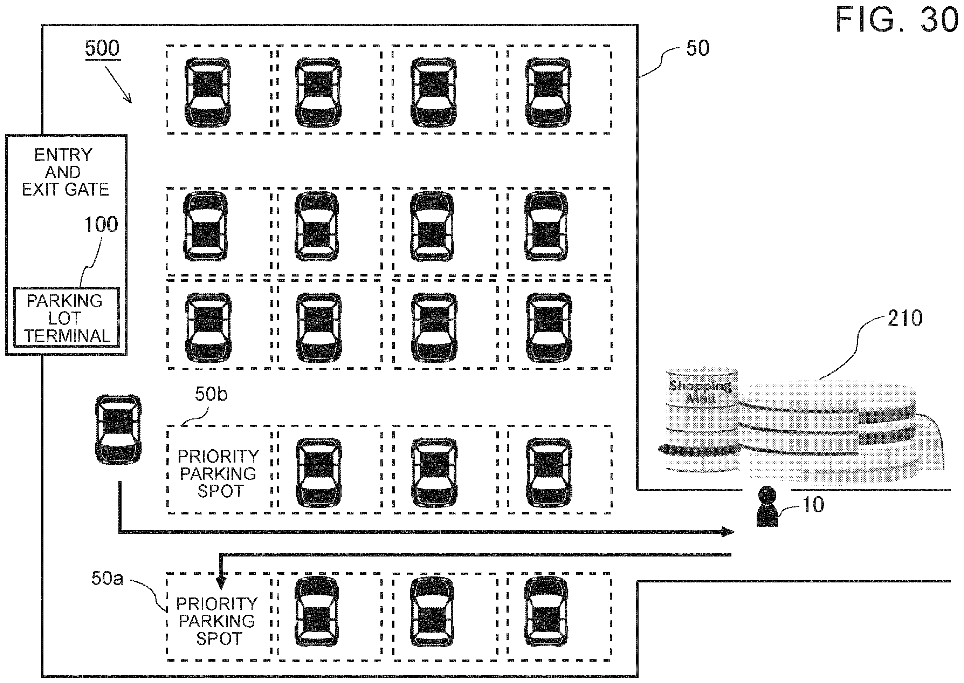

FIG. 30 is a third diagram illustrating the preferential service that is offered to the user 10 of the vehicle 500 in the third embodiment. As shown in FIG. 30, after entering the parking lot 50, the user 10 provided with the priority parking spot 50a moves the vehicle 500 to a drop-off space near the shopping mall 210 and gets out of the vehicle 500 in the drop-off space to visit the shopping mall 210. After the user 10 gets out of the vehicle 500, the vehicle 500 is moved to the priority parking spot 50a by, e.g., a staff member of the parking lot 50. In this case as well, the convenience for the user 10 is increased in terms of visiting the shopping mall 210. It can therefore be said that the user who gets such a preferential service regarding a parking spot gets a higher level of the preferential service regarding a parking spot than the user who is merely provided with the priority parking spot 50a.

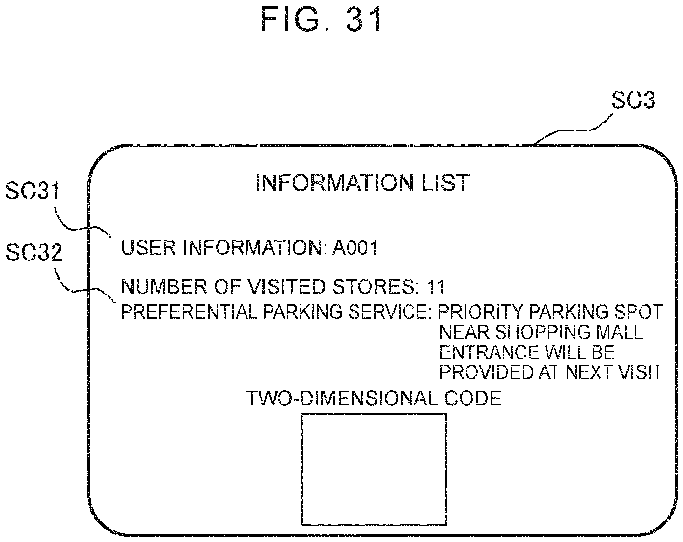

Regarding again the process that is performed by the server 300 to offer the preferential service to the user 10, in the third embodiment, information on the preferential service determined in S107 is sent to the mobile terminal 40 of the user 10 in S302 of FIG. 16. FIG. 31 illustrates the information on the preferential service that is sent to the mobile terminal 40 of the user 10. The information list shown in FIG. 31 is displayed on the display device etc. of the mobile terminal 40 by a predetermined application. As shown in FIG. 31, information SC31 on the user and information SC32 on the preferential service are displayed on an information list screen SC3. The number of visited stores, the preferential service regarding a parking spot, and a two-dimensional code are displayed as the information SC32 on the preferential service on the information list screen SC3. The two-dimensional code has recorded thereon the information on the preferential service regarding a parking spot, and the two-dimensional code is read by the parking lot terminal 100 the next time the vehicle 500 enters the parking lot 50. The user 10 is thus notified of the content of the preferential service regarding a parking spot for the next visit, and the two-dimensional code to be used when the user 10 uses the preferential service regarding a parking spot at the next visit is sent to the mobile terminal 40 of the user 10. The user 10 can thus recognize that the preferential service will be offered to him or her. The user 10 is thus more motivated to visit more member stores 20 of the shopping mall 210. The users of the parking lot 50 associated with the shopping mall 210 can therefore be encouraged to visit the member stores 20 of the shopping mall 210.

### Fourth Embodiment

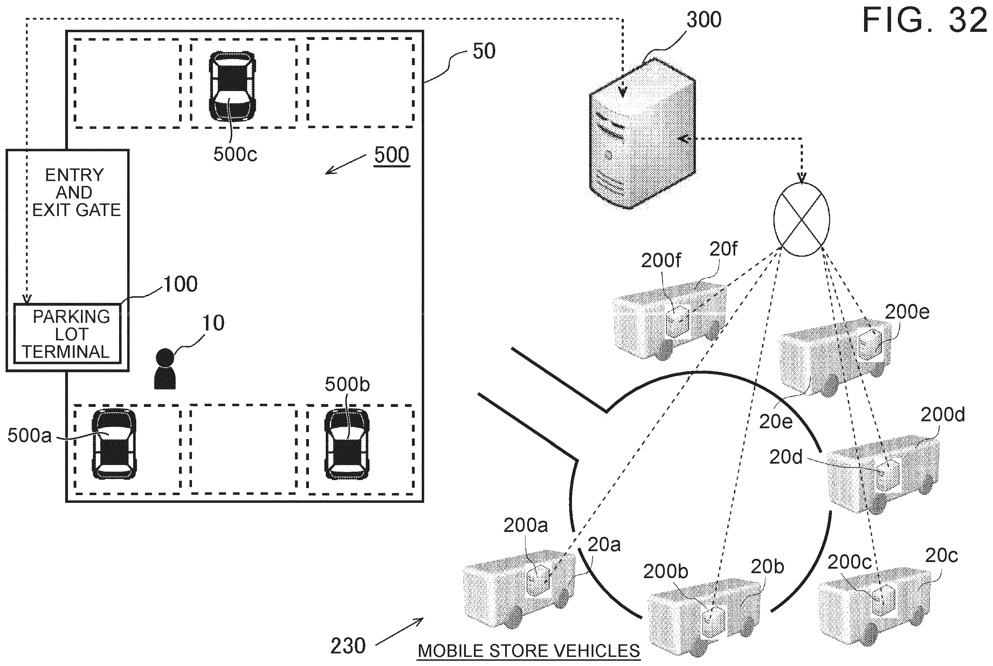

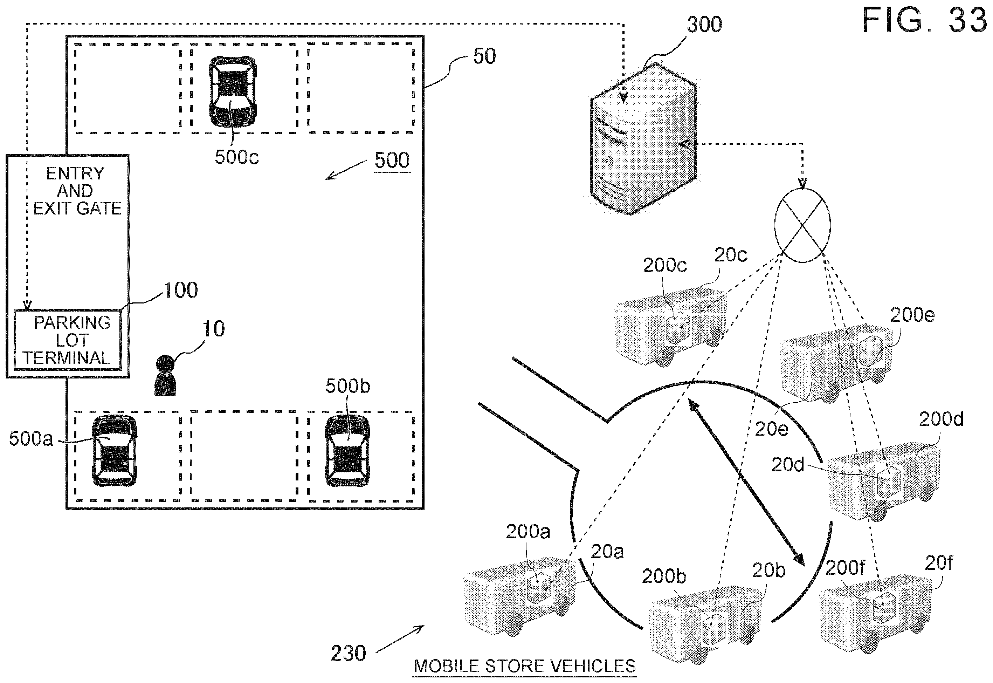

A fourth embodiment will be described with reference to FIGS. 32 and 33. FIG. 32 illustrates a schematic configuration of an information processing system of the fourth embodiment. The information processing system according to the fourth embodiment includes the parking lot terminal 100 installed in the parking lot 50, the store terminals 200 installed in the member stores 20 belonging to a mobile shopping mall 230 (member stores 20a to 20f in FIG. 32), and the server 300. The parking lot 50 is a parking lot associated with the mobile shopping mall 230 and may be either a parking lot provided by the mobile shopping mall 230 or a parking lot located near the mobile shopping mall 230 and having a specific contractual relationship with the mobile shopping mall 230. In the fourth embodiment, the store terminals 200a to 200f are the store terminals 200 installed in the member stores 20a to 20f.

The mobile shopping mall 230 in the fourth embodiment is a collection of mobile store vehicles having equipment for business operation. That is, the member stores 20 of the mobile shopping mall 230 are stores provided in the mobile store vehicles.

The mobile store vehicle includes a sensor 601, a position information acquisition unit 602, a vehicle control unit 603, a communication unit 604, and a control unit 605. The mobile store vehicle may be a gasoline vehicle or a diesel vehicle or may be an electric vehicle, and is driven by the electric power supplied from an internal combustion engine or a battery.

The sensor 601 is a unit that senses the state of the vehicle and senses the surroundings of the vehicle. Examples of the sensor 601 for sensing the state of the vehicle include an acceleration sensor, a speed sensor, and an azimuth sensor. Examples of the sensor 601 for sensing the surroundings of the vehicle include a stereo camera, a laser scanner, a Light Detection and Ranging (LIDAR) system, and a radar. Information acquired by the sensor 601 is sent to the control unit 605.

The position information acquisition unit 602 is a unit that acquires the current position of the vehicle, and is typically a GPS device that receives GPS satellite signals to obtain position information. The position information obtained from the GPS device represents a latitude, a longitude, and an altitude. The position information acquisition unit 602 may be a positioning device based on a global navigation satellite system (GNSS) other than GPS or may be a positioning device based on base station positioning, as long as it can acquire the current position of the vehicle.

The vehicle control unit 603 controls the mobile store vehicle's functions as a vehicle. The vehicle control unit 603 includes, e.g., an engine or a motor, an inverter, a brake, steering, and an electronic control unit (ECU) that controls these components.

The communication unit 604 is a communication unit for connecting the mobile store vehicle to a network. In the fourth embodiment, the communication unit 604 can communicate with other devices (e.g., the server 300) via the network using a mobile communication service such as a third-generation (3G) mobile network or Long Term Evolution (LTE). The communication unit 604 may include a communication unit for performing vehicle-to-vehicle communication with other mobile store vehicles.

The control unit 605 is a computer that controls the entire mobile store vehicle. The control unit 605 is composed of, e.g., a microprocessor and a memory having programs stored therein. The control unit 605 is caused to function by the microprocessor executing the programs. A part or all of the functions may be implemented by a logic circuit such as an ASIC or an FPGA.

The mobile store vehicle according to the fourth embodiment is an autonomous mobile body capable of automatic driving and unmanned driving, and autonomously moves based on commands from the outside. The mobile store vehicle is not intended to be limited to the autonomous mobile body, and the mobile store vehicle may be driven by a driver.

In the information processing system according to the fourth embodiment including such a mobile shopping mall 230 as well, the server 300 performs a process of offering a preferential service to the user 10 in a manner described above. The users of the parking lot 50 associated with the mobile shopping mall 230 are thus encouraged to visit the member stores 20 of the mobile shopping mall 230. In the fourth embodiment, the server 300 sends commands to move the mobile store vehicles of the mobile shopping mall 230 based on the store visit behavior of the user 10 acquired in the process. The users of the parking lot 50 are thus more encouraged to visit the member stores 20 of the mobile shopping mall 230. This will be described below.

As shown in FIG. 32, the member stores 20a, 20f out of the member stores 20 of the mobile shopping mall 230 are located relatively close to a passage leading to the parking lot 50. In this case, if the member store 20f is a store that is very popular among the users 10, there may be a possibility that the user 10 visiting the mobile shopping mall 230 may visit only the member store 20f and head to the parking lot 50 without being aware of the presence of member stores 20 located relatively far from the passage leading to the parking lot 50 (e.g., member stores 20c, 20d in FIG. 32).

Therefore, the control unit 303 of the server 300 of the fourth embodiment acquires the number of user visits to each member store 20 based on the acquired store visit behaviors of the users 10, and sends a command to move to each mobile store vehicle to be moved in order to rearrange the mobile store vehicles of the mobile shopping mall 230. FIG. 33 illustrates an example in which the mobile store vehicles are rearranged based on the number of user visits to each member store 20. In the example of FIG. 33, it is assumed that, among the member stores 20, the member store 20f has the largest number of user visits and the member store 20c has the smallest number of user visits in the state before the mobile store vehicles are rearranged (the state shown in FIG. 32). In this case, the control unit 303 sends a command to move to the mobile store vehicle having the member store 20f and the mobile store vehicle having the member store 20c in order to switch the positions of the member stores 20f, 20c. As shown in FIG. 33, the member store 20f is thus located relatively far from the passage leading to the parking lot 50. Accordingly, if the member store 20f is a store that is very popular among the users 10, the user 10 visiting the mobile shopping mall 230 will be aware of the presence of other member stores 20 on the way to the member store 20f. Since the member store 20c is located relatively close to the passage leading to the parking lot 50, the member store 20c is more easily recognized by the user 10. As a result, the users of the parking lot 50 are encouraged to visit the member stores 20 of the mobile shopping mall 230 as a whole.

The process that is described as being performed by one device may be divided and performed by a plurality of devices. For example, the acquisition unit 3031 and the calculation unit 3032 may be formed in an arithmetic processing unit different from the server 300. In this case, this arithmetic processing unit is configured to suitably cooperate with the server 300. The processes that are described as being performed by different devices may be performed by one device. In the computer system, the hardware configuration (server configuration) that is used to implement each function can be flexibly changed.

The present disclosure can also be implemented by supplying a computer with computer programs having implemented therein the functions described in the above embodiments, and causing one or more processors of the computer to read and execute the programs. Such computer programs may be provided to the computer by a non-transitory computer-readable storage medium that can be connected to a system bus of the computer, or may be provided to the computer via a network. Examples of the non-transitory computer-readable storage medium include any type of disk or disc such as a magnetic disk (a floppy (registered trademark) disk, a hard disk drive (HDD), etc.) and an optical disc (a CD-ROM, a DVD disc, a Blu-ray disc, etc.), a ROM, a RAM, an EPROM, an EEPROM, a magnetic card, a flash memory, an optical card, and any type of medium suitable for storing electronic instructions.

## Claims

1. An information processor (300) comprising a control unit (303) configured to:
acquire a store visit behavior of a user (10) of a vehicle (500) parked in a parking lot (50) associated with a commercial accumulation (210), the store visit behavior being related to a visit to a member store (20) by the user (10), the member store (20) being a store belonging to the commercial accumulation (210), and the commercial accumulation (210) having a plurality of the member stores (20), wherein the control unit (303) is configured to acquire the store visit behavior based on behavior information of the user (10) detected by a sensor configured to detect a behavior of the user (10) in the member store (20);
calculate the number of visited stores based on the store visit behavior, the number of visited stores being the number of member stores (20) visited by the user (10), wherein the control unit (303) is configured to determine that the user (10) has visited the member store (20) when the user (10) has passed a predetermined point in the member store (20);
determine a preferential service to be offered to the user (10) regarding use of the parking lot (50), the preferential service being determined in such a manner that a level of the preferential service increases as the number of visited stores by the user (10) increases; and
perform a preferential treatment process of applying the preferential service to the user (10), wherein the preferential treatment process is a process of discounting a parking fee to be paid by the user (10),
wherein the member store (20) belonging to the commercial accumulation (210) is provided in a mobile store vehicle, and the mobile store vehicle is an autonomous mobile body that autonomously moves based on a command from outside; and
the control unit (303) is configured to acquire the number of user visits to the member store (20) based on the store visit behaviors and to send the command to move the mobile store vehicle, based on the store visit behavior, the command to move the mobile store vehicle being a command to switch a position of the mobile store vehicle (20f) having the largest number of user visits with a position of the mobile store vehicle (20c) having the smallest number of user visits.

2. The information processor (300) according to claim 1, wherein the control unit (303) is configured to determine that the user (10) has visited the member store (20) when the user (10) has moved along a predetermined flow line including the predetermined point in the member store (20).

3. The information processor (300) according to claim 1 or 2, wherein:
the sensor is provided in a mobile terminal (40) of the user (10); and
the control unit (303) is configured to acquire the behavior information based on position information of the user (10) detected by the sensor.

4. The information processor (300) according to claim 1 or 2, wherein:
the sensor is composed of a first sensor provided in a mobile terminal (40) of the user (10) and a second sensor provided in the member store (20); and
the control unit (303) is configured to acquire the behavior information based on information detected by short-range wireless communication between the first sensor provided in the mobile terminal (40) of the user (10) and the second sensor provided in the member store (20).

5. The information processor (300) according to claim 3 or 4, wherein the control unit (303) is configured to send information on the preferential service to be offered to the user (10) to the mobile terminal of the user (10).

6. The information processor (300) according to claim 1 or 2, wherein:
the sensor is provided in the member store (20); and
the control unit (303) is configured to acquire the behavior information based on first recognition information, the first recognition information being facial recognition information of the user (10) detected by the sensor.

7. The information processor (300) according to claim 6, wherein the control unit (303) is configured to:
acquire second recognition information, the second recognition information being facial recognition information of the user (10) detected in the parking lot (50) by a parking lot sensor provided in the parking lot (50); and
perform facial authentication of the user (10) by comparing the first recognition information detected in the member store (20) with the second recognition information detected in the parking lot (50).

8. The information processor (300) according to any one of claims 1 to 7, wherein the control unit (303) is configured to, when a plurality of the users (10) have the same number of visited stores, determine the preferential service for each of the users (10) in such a manner that the level of the preferential service to be offered to the user whose length of stay in the member stores (20) is longer is higher than the level of the preferential service to be offered to the user whose length of stay in the member stores (20) is shorter.

9. The information processor (300) according to any one of claims 1 to 8, wherein the control unit (303) is configured to send the information on the preferential service to be offered to the user (10) to an on-board device of the vehicle (500).

10. The information processor (300) according to claim 9, wherein the preferential treatment process is performed as the information on the preferential service sent to the on-board device of the vehicle (500) is sent to a management device by short-range wireless communication between a third sensor provided in the vehicle (500) and a fourth sensor provided in the parking lot (50), the management device being a device that manages the parking lot (50).

11. The information processor (300) according to any one of claims 1 to 10, wherein the preferential treatment process is a process of preferentially providing the user (10) with a parking spot at a next or later visit.

12. An information processing method comprising:
acquiring by a computer (300) a store visit behavior of a user (10) of a vehicle (500) parked in a parking lot (50) associated with a commercial accumulation (210), the store visit behavior being related to a visit to a member store (20) by the user (10), the member store (20) being a store belonging to the commercial accumulation (210), and the commercial accumulation (210) having a plurality of the member stores (20), wherein the store visit behavior is acquired based on behavior information of the user (10) detected by a sensor configured to detect a behavior of the user (10) in the member store (20);
calculating by the computer the number of visited stores based on the store visit behavior, the number of visited stores being the number of member stores (20) visited by the user (10), wherein the user (10) is determined to visit the member store (20) when the user (10) has passed a predetermined point in the member store (20);
determining by the computer a preferential service to be offered to the user (10) regarding use of the parking lot (50), the preferential service being determined in such a manner that a level of the preferential service increases as the number of visited stores by the user (10) increases; and
performing by the computer a preferential treatment process of applying the preferential service to the user (10), wherein the preferential treatment process is a process of discounting a parking fee to be paid by the user (10),
acquiring the number of user visits to the member store (20) based on the store visit behaviors,
wherein the member store (20) belonging to the commercial accumulation (210) is provided in a mobile store vehicle, and the mobile store vehicle is an autonomous mobile body that autonomously moves based on a command from outside; and
the command to move the mobile store vehicle is sent based on the store visit behavior, the command to move the mobile store vehicle being a command to switch a position of the mobile store vehicle (20f) having the largest number of user visits with a position of the mobile store vehicle (20c) having the smallest number of user visits.

13. A non-transitory storage medium storing instructions that are executable by one or more processors and that cause the one or more processors to perform functions comprising:
acquiring a store visit behavior of a user (10) of a vehicle (500) parked in a parking lot (50) associated with a commercial accumulation (210), the store visit behavior being related to a visit to a member store (20) by the user (10), the member store (20) being a store belonging to the commercial accumulation (210), and the commercial accumulation (210) having a plurality of the member stores (20), wherein the store visit behavior is acquired based on behavior information of the user (10) detected by a sensor configured to detect a behavior of the user (10) in the member store (20) ;
calculating the number of visited stores based on the store visit behavior, the number of visited stores being the number of member stores (20) visited by the user (10), wherein the user (10) is determined to visit the member store (20) when the user (10) has passed a predetermined point in the member store (20);
determining a preferential service to be offered to the user (10) regarding use of the parking lot (50), the preferential service being determined in such a manner that a level of the preferential service increases as the number of visited stores by the user (10) increases; and
performing a preferential treatment process of applying the preferential service to the user (10), wherein the preferential treatment process is a process of discounting a parking fee to be paid by the user (10),
acquiring the number of user visits to the member store (20) based on the store visit behaviors,
wherein the member store (20) belonging to the commercial accumulation (210) is provided in a mobile store vehicle, and the mobile store vehicle is an autonomous mobile body that autonomously moves based on a command from outside; and
the command to move the mobile store vehicle is sent based on the store visit behavior, the command to move the mobile store vehicle being a command to switch a position of the mobile store vehicle (20f) having the largest number of user visits with a position of the mobile store vehicle (20c) having the smallest number of user visits.

## Patentansprüche

1. Informationsprozessor (300), umfassend eine Steuereinheit (303), die zu Folgendem konfiguriert ist:
Erfassen eines Ladengeschäftbesuchsverhaltens eines Benutzers (10) eines Fahrzeugs (500), das auf einem Parkplatz (50) geparkt ist, der mit einer kommerziellen Ansammlung (210) assoziiert ist, wobei sich das Ladengeschäftbesuchsverhalten auf einen Besuch des Benutzers (10) in einem Mitgliedsladengeschäft (20) bezieht, wobei das Mitgliedsladengeschäft (20) ein Ladengeschäft ist, das zu der kommerziellen Ansammlung (210) gehört, und die kommerzielle Ansammlung (210) eine Vielzahl von Mitgliedsladengeschäften (20) aufweist, wobei die Steuereinheit (303) konfiguriert ist, um das Ladengeschäftsbesuchsverhalten basierend auf Verhaltensinformationen des Benutzers (10) zu erfassen, die von einem Sensor erkannt werden, der konfiguriert ist, um ein Verhalten des Benutzers (10) in dem Mitgliedsladengeschäft (20) zu erkennen;
Berechnen der Anzahl der besuchten Ladengeschäfte basierend auf dem Ladengeschäftbesuchsverhalten, wobei die Anzahl der besuchten Ladengeschäfte die Anzahl der von dem Benutzer (10) besuchten Mitgliedsladengeschäfte (20) ist, wobei die Steuereinheit (303) konfiguriert ist, um zu bestimmen, dass der Benutzer (10) das Mitgliedsladengeschäft (20) besucht hat, wenn der Benutzer (10) einen vorbestimmten Punkt in dem Mitgliedsladengeschäft (20) passiert hat;
Bestimmen eines Vorzugsservice, der dem Benutzer (10) in Bezug auf die Benutzung des Parkplatzes (50) angeboten werden soll, wobei der Vorzugsservice auf eine Weise bestimmt wird, dass ein Niveau des Vorzugsservices mit der Anzahl der von dem Benutzer (10) besuchten Ladengeschäfte zunimmt; und
Durchführen eines Vorzugsbehandlungsprozess eines Anwendens des Vorzugsservices auf den Benutzer (10), wobei der Vorzugsbehandlungsprozess ein Prozess einer Ermäßigung einer von dem Benutzer (10) zu zahlenden Parkgebühr ist,
wobei das zu der kommerziellen Ansammlung (210) gehörende Mitgliedsladengeschäft (20) in einem mobilen Ladengeschäftfahrzeug bereitgestellt wird und das mobile Ladengeschäftfahrzeug ein autonomer mobiler Körper ist, der sich basierend auf einem Befehl von außen autonom bewegt; und
die Steuereinheit (303) konfiguriert ist, um die Anzahl von Benutzerbesuchen in dem Mitgliedsladengeschäft (20) basierend auf dem Ladengeschäftbesuchsverhalten zu erfassen und den Befehl zum Bewegen des mobilen Ladengeschäftfahrzeugs basierend auf dem Ladengeschäftbesuchsverhaltens zu senden, wobei der Befehl zum Bewegen des mobilen Ladengeschäftfahrzeugs ein Befehl zum Umschalten einer Position des mobilen Ladengeschäftfahrzeugs (20f), das die größte Anzahl von Benutzerbesuchen aufweist, auf eine Position des mobilen Ladengeschäftfahrzeugs (20c), das die kleinste Anzahl von Benutzerbesuchen aufweist, ist.

2. Informationsprozessor (300) nach Anspruch 1, wobei die Steuereinheit (303) konfiguriert ist, um zu bestimmen, dass der Benutzer (10) das Mitgliedsladengeschäft (20) besucht hat, wenn sich der Benutzer (10) entlang einer vorbestimmten Flusslinie bewegt hat, die den vorbestimmten Punkt in dem Mitgliedsladengeschäft (20) beinhaltet.

3. Informationsprozessor (300) nach Anspruch 1 oder 2, wobei: der Sensor in einem mobilen Endgerät (40) des Benutzers (10) bereitgestellt ist; und
die Steuereinheit (303) konfiguriert ist, um die Verhaltensinformationen basierend auf durch den Sensor erkannten Positionsinformationen des Benutzers (10) zu erfassen.

4. Informationsprozessor (300) nach Anspruch 1 oder 2, wobei:
der Sensor aus einem ersten Sensor, der in einem mobilen Endgerät (40) des Benutzers (10) bereitgestellt ist, und einem zweiten Sensor, der in dem Mitgliedsladengeschäft (20) bereitgestellt ist, besteht; und
die Steuereinheit (303) konfiguriert ist, um die Verhaltensinformationen basierend auf Informationen zu erfassen, die durch drahtlose Kurzstreckenkommunikation zwischen dem ersten Sensor, der in dem mobilen Endgerät (40) des Benutzers (10) bereitgestellt ist, und dem zweiten Sensor, der in dem Mitgliedsladengeschäft (20) bereitgestellt ist, erkannt werden.

5. Informationsprozessor (300) nach Anspruch 3 oder 4, wobei die Steuereinheit (303) konfiguriert ist, um Informationen über den Vorzugsservice, der dem Benutzer (10) angeboten werden soll, an das mobile Endgerät des Benutzers (10) zu senden.

6. Informationsprozessor (300) nach Anspruch 1 oder 2, wobei: der Sensor in dem Mitgliedsladengeschäft (20) bereitgestellt ist; und
die Steuereinheit (303) konfiguriert ist, um die Verhaltensinformationen basierend auf ersten Erkennungsinformationen zu erfassen, wobei die ersten Erkennungsinformationen Gesichtserkennungsinformationen des Benutzers (10) sind, die von dem Sensor erkannt werden.

7. Informationsprozessor (300) nach Anspruch 6, wobei die Steuereinheit (303) zu Folgendem konfiguriert ist:
Erfassen von zweiten Erkennungsinformationen, wobei die zweiten Erkennungsinformationen Gesichtserkennungsinformationen des Benutzers (10) sind, die auf dem Parkplatz (50) von einem auf dem Parkplatz (50) bereitgestellten Parkplatzsensor erkannt werden; und
Durchführen von Gesichtsauthentifizierung des Benutzers (10), indem die ersten Erkennungsinformationen, die in dem Mitgliedsladengeschäft (20) erkannt werden, mit den zweiten Erkennungsinformationen, die auf dem Parkplatz (50) erkannt werden, verglichen werden.

8. Informationsprozessor (300) nach einem der Ansprüche 1 bis 7, wobei die Steuereinheit (303) konfiguriert ist, um, wenn mehrere Benutzer (10) die gleiche Anzahl von besuchten Ladengeschäften aufweisen, den Vorzugsservice für jeden der Benutzer (10) zu bestimmen, sodass das Niveau des Vorzugsservices, der dem Benutzer angeboten werden soll, dessen Aufenthaltsdauer in den Mitgliedsladengeschäften (20) länger ist, höher ist als das Niveau des Vorzugsservices, der dem Benutzer angeboten werden soll, dessen Aufenthaltsdauer in den Mitgliedsladengeschäften (20) kürzer ist.

9. Informationsprozessor (300) nach einem der Ansprüche 1 bis 8, wobei die Steuereinheit (303) konfiguriert ist, um die Informationen über den dem Benutzer (10) anzubietenden Vorzugsservice an eine Bordvorrichtung des Fahrzeugs (500) zu senden.

10. Informationsprozessor (300) nach Anspruch 9, wobei der Vorzugsbehandlungsprozess durchgeführt wird, indem die an die Bordvorrichtung des Fahrzeugs (500) gesendeten Informationen über den Vorzugsservice durch drahtlose Kurzstreckenkommunikation zwischen einem dritten Sensor, der in dem Fahrzeug (500) bereitgestellt ist, und einem vierten Sensor, der auf dem Parkplatz (50) bereitgestellt ist, an eine Verwaltungsvorrichtung gesendet werden, wobei die Verwaltungsvorrichtung eine Vorrichtung ist, die den Parkplatz (50) verwaltet.

11. Informationsprozessor (300) nach einem der Ansprüche 1 bis 10, wobei der Vorzugsbehandlungsprozess ein Prozess ist, bei dem dem Benutzer (10) bei einem nächsten oder späteren Besuch bevorzugt ein Parkplatz bereitgestellt wird.

12. Informationsverarbeitungsverfahren, umfassend:
Erfassen, durch einen Computer (300), eines Ladengeschäftbesuchsverhaltens eines Benutzers (10) eines Fahrzeugs (500), das auf einem Parkplatz (50) geparkt ist, der mit einer kommerziellen Ansammlung (210) assoziiert ist, wobei sich das Ladengeschäftbesuchsverhalten auf einen Besuch des Benutzers (10) in einem Mitgliedsladengeschäft (20) bezieht, wobei das Mitgliedsladengeschäft (20) ein Ladengeschäft ist, das zu der kommerziellen Ansammlung (210) gehört, und die kommerzielle Ansammlung (210) eine Vielzahl von Mitgliedsladengeschäften (20) aufweist, wobei das Ladengeschäftsbesuchsverhalten basierend auf Verhaltensinformationen des Benutzers (10) erfasst wird, die von einem Sensor erkannt werden, der konfiguriert ist, um ein Verhalten des Benutzers (10) in dem Mitgliedsladengeschäft (20) zu erkennen;
Berechnen, durch den Computer, der Anzahl von besuchten Ladengeschäften basierend auf dem Ladengeschäftbesuchsverhalten, wobei die Anzahl von besuchten Ladengeschäften die Anzahl der von dem Benutzer (10) besuchten Mitgliedsladengeschäfte (20) ist, wobei bestimmt wird, dass der Benutzer (10) das Mitgliedsladengeschäft (20) besucht hat, wenn der Benutzer (10) einen vorbestimmten Punkt in dem Mitgliedsladengeschäft (20) passiert hat;
Bestimmen, durch den Computer, eines Vorzugsservice, der dem Benutzer (10) in Bezug auf die Benutzung des Parkplatzes (50) angeboten werden soll, wobei der Vorzugsservice auf eine Weise bestimmt wird, dass ein Niveau des Vorzugsservices mit der Anzahl der von dem Benutzer (10) besuchten Ladengeschäfte zunimmt; und
Durchführen, durch den Computer, eines Vorzugsbehandlungsprozesses durch den Computer zum Anwenden des Vorzugsdienstes auf den Benutzer (10), wobei der Vorzugsbehandlungsprozess ein Prozess der Ermäßigung einer von dem Benutzer (10) zu zahlenden Parkgebühr ist,
Erfassen der Anzahl von Benutzerbesuchen in dem Mitgliedsladengeschäft (20) basierend auf dem Ladengeschäftbesuchsverhalten,
wobei das zu der kommerziellen Ansammlung (210) gehörende Mitgliedsladengeschäft (20) in einem mobilen Ladengeschäftfahrzeug bereitgestellt wird und das mobile Ladengeschäftfahrzeug ein autonomer mobiler Körper ist, der sich basierend auf einem Befehl von außen autonom bewegt; und
der Befehl zum Bewegen des mobilen Ladengeschäftfahrzeugs basierend auf dem Ladengeschäftbesuchsverhalten gesendet wird, der Befehl zum Bewegen des mobilen Ladengeschäftfahrzeugs ein Befehl zum Umschalten einer Position des mobilen Ladengeschäftfahrzeugs (20f), das die größte Anzahl von Benutzerbesuchen aufweist, auf eine Position des mobilen Ladengeschäftfahrzeugs (20c), das die kleinste Anzahl von Benutzerbesuchen aufweist, ist.

13. Nicht-transitorisches Speichermedium, das Anweisungen speichert, die von einem oder mehreren Prozessoren ausführbar sind und die den einen oder die mehreren Prozessoren veranlassen, Funktionen auszuführen, umfassend:
Erfassen eines Ladengeschäftbesuchsverhaltens eines Benutzers (10) eines Fahrzeugs (500), das auf einem Parkplatz (50) geparkt ist, der mit einer kommerziellen Ansammlung (210) assoziiert ist, wobei sich das Ladengeschäftbesuchsverhalten auf einen Besuch des Benutzers (10) in einem Mitgliedsladengeschäft (20) bezieht, wobei das Mitgliedsladengeschäft (20) ein Ladengeschäft ist, das zu der kommerziellen Ansammlung (210) gehört, und die kommerzielle Ansammlung (210) eine Vielzahl von Mitgliedsladengeschäften (20) aufweist, wobei das Ladengeschäftsbesuchsverhalten basierend auf Verhaltensinformationen des Benutzers (10) erfasst wird, die von einem Sensor erkannt werden, der konfiguriert ist, um ein Verhalten des Benutzers (10) in dem Mitgliedsladengeschäft (20) zu erkennen;
Berechnen der Anzahl von besuchten Ladengeschäften basierend auf dem Ladengeschäftbesuchsverhalten, wobei die Anzahl von besuchten Ladengeschäften die Anzahl der von dem Benutzer (10) besuchten Mitgliedsladengeschäfte (20) ist, wobei bestimmt wird, dass der Benutzer (10) das Mitgliedsladengeschäft (20) besucht hat, wenn der Benutzer (10) einen vorbestimmten Punkt in dem Mitgliedsladengeschäft (20) passiert hat;
Bestimmen eines Vorzugsservice, der dem Benutzer (10) in Bezug auf die Benutzung des Parkplatzes (50) angeboten werden soll, wobei der Vorzugsservice auf eine Weise bestimmt wird, dass ein Niveau des Vorzugsservices mit der Anzahl der von dem Benutzer (10) besuchten Ladengeschäfte zunimmt; und
Durchführen eines Vorzugsbehandlungsprozesses eines Anwendens des Vorzugsdienstes auf den Benutzer (10), wobei der Vorzugsbehandlungsprozess ein Prozess einer Ermäßigung einer Parkgebühr ist, die von dem Benutzer (10) zu zahlen ist,
Erfassen der Anzahl von Benutzerbesuchen in dem Mitgliedsladengeschäft (20) basierend auf dem Ladengeschäftbesuchsverhalten,
wobei das zu der kommerziellen Ansammlung (210) gehörende Mitgliedsladengeschäft (20) in einem mobilen Ladengeschäftfahrzeug bereitgestellt wird und das mobile Ladengeschäftfahrzeug ein autonomer mobiler Körper ist, der sich basierend auf einem Befehl von außen autonom bewegt; und
der Befehl zum Bewegen des mobilen Ladengeschäftfahrzeugs basierend auf dem Ladengeschäftbesuchsverhalten gesendet wird, der Befehl zum Bewegen des mobilen Ladengeschäftfahrzeugs ein Befehl zum Umschalten einer Position des mobilen Ladengeschäftfahrzeugs (20f), das die größte Anzahl von Benutzerbesuchen aufweist, auf eine Position des mobilen Ladengeschäftfahrzeugs (20c), das die kleinste Anzahl von Benutzerbesuchen aufweist, ist.

## Revendications

1. Processeur d'informations (300) comprenant une unité de commande (303) configurée pour :
acquérir un comportement de visite en magasin d'un utilisateur (10) d'un véhicule (500) stationné dans un parking (50) associé à un centre commercial (210), le comportement de visite en magasin étant lié à une visite dans un magasin membre (20) par l'utilisateur (10), le magasin membre (20) étant un magasin appartenant au centre commercial (210), et le centre commercial (210) ayant une pluralité de magasins membres (20), dans lequel l'unité de commande (303) est configurée pour acquérir le comportement de visite en magasin sur la base d'informations de comportement de l'utilisateur (10) détectées par un capteur configuré pour détecter un comportement de l'utilisateur (10) dans le magasin membre (20) ;
calculer le nombre de magasins visités sur la base du comportement de visite en magasin, le nombre de magasins visités étant le nombre de magasins membres (20) visités par l'utilisateur (10), dans lequel l'unité de commande (303) est configurée pour déterminer que l'utilisateur (10) a visité le magasin membre (20) lorsque l'utilisateur (10) a franchi un point prédéterminé dans le magasin membre (20) ;
déterminer un service préférentiel à proposer à l'utilisateur (10) concernant l'utilisation du parking (50), le service préférentiel étant déterminé de telle manière qu'un niveau du service préférentiel augmente à mesure que le nombre de magasins visités par l'utilisateur (10) augmente ; et
effectuer un processus de traitement préférentiel consistant à appliquer le service préférentiel à l'utilisateur (10), dans lequel le processus de traitement préférentiel est un processus consistant à accorder une réduction sur des frais de stationnement à payer par l'utilisateur (10),
dans lequel le magasin membre (20) appartenant au centre commercial (210) est prévu dans un véhicule de magasin mobile, et le véhicule de magasin mobile est un corps mobile autonome qui se déplace de manière autonome sur la base d'une instruction provenant de l'extérieur; et
l'unité de commande (303) est configurée pour acquérir le nombre de visites d'utilisateurs dans le magasin membre (20) sur la base des comportements de visite en magasin et pour envoyer l'instruction de déplacement du véhicule de magasin mobile, sur la base du comportement de visite en magasin, l'instruction de déplacement du véhicule de magasin mobile étant une instruction visant à permuter une position du véhicule de magasin mobile (20f) ayant le plus grand nombre de visites d'utilisateurs avec une position du véhicule de magasin mobile (20c) ayant le plus petit nombre de visites d'utilisateurs.

2. Processeur d'informations (300) selon la revendication 1, dans lequel l'unité de commande (303) est configurée pour déterminer que l'utilisateur (10) a visité le magasin membre (20) lorsque l'utilisateur (10) s'est déplacé le long d'une ligne de flux prédéterminée comprenant le point prédéterminé dans le magasin membre (20).

3. Processeur d'informations (300) selon la revendication 1 ou 2, dans lequel :
le capteur est prévu dans un terminal mobile (40) de l'utilisateur (10) ; et
l'unité de commande (303) est configurée pour acquérir les informations de comportement sur la base d'informations de position de l'utilisateur (10) détectées par le capteur.

4. Processeur d'informations (300) selon la revendication 1 ou 2, dans lequel :
le capteur est composé d'un premier capteur prévu dans un terminal mobile (40) de l'utilisateur (10) et d'un deuxième capteur prévu dans le magasin membre (20) ; et
l'unité de commande (303) est configurée pour acquérir les informations de comportement sur la base d'informations détectées par une communication sans fil à courte portée entre le premier capteur prévu dans le terminal mobile (40) de l'utilisateur (10) et le deuxième capteur prévu dans le magasin membre (20).

5. Processeur d'informations (300) selon la revendication 3 ou 4, dans lequel l'unité de commande (303) est configurée pour envoyer des informations sur le service préférentiel à proposer à l'utilisateur (10) au terminal mobile de l'utilisateur (10).

6. Processeur d'informations (300) selon la revendication 1 ou 2, dans lequel :
le capteur est prévu dans le magasin membre (20) ; et
l'unité de commande (303) est configurée pour acquérir les informations de comportement sur la base de premières informations de reconnaissance, les premières informations de reconnaissance étant des informations de reconnaissance faciale de l'utilisateur (10) détectées par le capteur.

7. Processeur d'informations (300) selon la revendication 6, dans lequel l'unité de commande (303) est configurée pour :
acquérir des deuxièmes informations de reconnaissance, les deuxièmes informations de reconnaissance étant des informations de reconnaissance faciale de l'utilisateur (10) détectées dans le parking (50) par un capteur de parking prévu dans le parking (50) ; et
effectuer une authentification faciale de l'utilisateur (10) en comparant les premières informations de reconnaissance détectées dans le magasin membre (20) aux deuxièmes informations de reconnaissance détectées dans le parking (50).

8. Processeur d'informations (300) selon l'une quelconque des revendications 1 à 7, dans lequel l'unité de commande (303) est configurée pour, lorsqu'une pluralité des utilisateurs (10) ont le même nombre de magasins visités, déterminer le service préférentiel pour chacun des utilisateurs (10) de telle manière que le niveau du service préférentiel à proposer à l'utilisateur dont la durée de séjour dans les magasins membres (20) est plus longue est supérieur au niveau du service préférentiel à proposer à l'utilisateur dont la durée de séjour dans les magasins membres (20) est plus courte.

9. Processeur d'informations (300) selon l'une quelconque des revendications 1 à 8, dans lequel l'unité de commande (303) est configurée pour envoyer les informations sur le service préférentiel à proposer à l'utilisateur (10) à un dispositif embarqué du véhicule (500).

10. Processeur d'informations (300) selon la revendication 9, dans lequel le processus de traitement préférentiel est effectué lorsque les informations sur le service préférentiel envoyées au dispositif embarqué du véhicule (500) sont envoyées à un dispositif de gestion par le biais d'une communication sans fil à courte portée entre un troisième capteur prévu dans le véhicule (500) et un quatrième capteur prévu dans le parking (50), le dispositif de gestion étant un dispositif qui gère le parking (50).

11. Processeur d'informations (300) selon l'une quelconque des revendications 1 à 10, dans lequel le processus de traitement préférentiel est un processus consistant à fournir de manière préférentielle à l'utilisateur (10) une place de stationnement lors d'une visite suivante ou ultérieure.

12. Procédé de traitement d'informations, comprenant le fait de :
acquérir, par le biais d'un ordinateur (300), un comportement de visite en magasin d'un utilisateur (10) d'un véhicule (500) stationné dans un parking (50) associé à un centre commercial (210), le comportement de visite en magasin étant lié à une visite dans un magasin membre (20) par l'utilisateur (10), le magasin membre (20) étant un magasin appartenant au centre commercial (210), et le centre commercial (210) ayant une pluralité de magasins membres (20), dans lequel le comportement de visite en magasin est acquis sur la base d'informations de comportement de l'utilisateur (10) détectées par un capteur configuré pour détecter un comportement de l'utilisateur (10) dans le magasin membre (20) ;
calculer, par le biais de l'ordinateur, le nombre de magasins visités sur la base du comportement de visite en magasin, le nombre de magasins visités étant le nombre de magasins membres (20) visités par l'utilisateur (10), dans lequel il est déterminé que l'utilisateur (10) a visité le magasin membre (20) lorsque l'utilisateur (10) a franchi un point prédéterminé dans le magasin membre (20) ;
déterminer, par le biais de l'ordinateur, un service préférentiel à proposer à l'utilisateur (10) concernant l'utilisation du parking (50), le service préférentiel étant déterminé de telle manière qu'un niveau du service préférentiel augmente à mesure que le nombre de magasins visités par l'utilisateur (10) augmente; et
effectuer, par le biais de l'ordinateur, un processus de traitement préférentiel consistant à appliquer le service préférentiel à l'utilisateur (10), dans lequel le processus de traitement préférentiel est un processus consistant à accorder une réduction sur des frais de stationnement à payer par l'utilisateur (10),
acquérir le nombre de visites d'utilisateurs dans le magasin membre (20) sur la base des comportements de visite en magasin,
dans lequel le magasin membre (20) appartenant au centre commercial (210) est prévu dans un véhicule de magasin mobile, et le véhicule de magasin mobile est un corps mobile autonome qui se déplace de manière autonome sur la base d'une instruction provenant de l'extérieur; et
l'instruction de déplacement du véhicule de magasin mobile est envoyée sur la base du comportement de visite en magasin, l'instruction de déplacement du véhicule de magasin mobile étant une instruction visant à permuter une position du véhicule de magasin mobile (20f) ayant le plus grand nombre de visites d'utilisateurs avec une position du véhicule de magasin mobile (20c) ayant le plus petit nombre de visites d'utilisateurs.

13. Support de stockage non transitoire stockant des instructions qui sont exécutables par un ou plusieurs processeurs et qui amènent les un ou plusieurs processeurs à exécuter des fonctions comprenant le fait de :
acquérir un comportement de visite en magasin d'un utilisateur (10) d'un véhicule (500) stationné dans un parking (50) associé à un centre commercial (210), le comportement de visite en magasin étant lié à une visite dans un magasin membre (20) par l'utilisateur (10), le magasin membre (20) étant un magasin appartenant au centre commercial (210), et le centre commercial (210) ayant une pluralité de magasins membres (20), dans lequel le comportement de visite en magasin est acquis sur la base d'informations de comportement de l'utilisateur (10) détectées par un capteur configuré pour détecter un comportement de l'utilisateur (10) dans le magasin membre (20) ;
calculer le nombre de magasins visités sur la base du comportement de visite en magasin, le nombre de magasins visités étant le nombre de magasins membres (20) visités par l'utilisateur (10), dans lequel il est déterminé que l'utilisateur (10) a visité le magasin membre (20) lorsque l'utilisateur (10) a franchi un point prédéterminé dans le magasin membre (20) ;
déterminer un service préférentiel à proposer à l'utilisateur (10) concernant l'utilisation du parking (50), le service préférentiel étant déterminé de telle manière qu'un niveau du service préférentiel augmente à mesure que le nombre de magasins visités par l'utilisateur (10) augmente ; et
effectuer un processus de traitement préférentiel consistant à appliquer le service préférentiel à l'utilisateur (10), dans lequel le processus de traitement préférentiel est un processus consistant à accorder une réduction sur des frais de stationnement à payer par l'utilisateur (10),
acquérir le nombre de visites d'utilisateurs dans le magasin membre (20) sur la base des comportements de visite en magasin,
dans lequel le magasin membre (20) appartenant au centre commercial (210) est prévu dans un véhicule de magasin mobile, et le véhicule de magasin mobile est un corps mobile autonome qui se déplace de manière autonome sur la base d'une instruction provenant de l'extérieur ; et
l'instruction de déplacement du véhicule de magasin mobile est envoyée sur la base du comportement de visite en magasin, l'instruction de déplacement du véhicule de magasin mobile étant une instruction visant à permuter une position du véhicule de magasin mobile (20f) ayant le plus grand nombre de visites d'utilisateurs avec une position du véhicule de magasin mobile (20c) ayant le plus petit nombre de visites d'utilisateurs.
